# EUROPÄISCHE PATENTSCHRIFT

(11) **EP 3 614 515 B1**
(45) Veröffentlichungstag und Bekanntmachung des Hinweises auf die Patenterteilung: **25.03.2026**
(21) Anmeldenummer: 19193263.1
(22) Anmeldetag: 23.08.2019
(51) Int. Cl.: H02H 6/00, H02H 5/04, H02H 7/22, B60R 16/03

(54) **SICHERUNGSEINRICHTUNG, FAHRZEUG UND VERFAHREN**
SECURITY DEVICE, VEHICLE AND METHOD
DISPOSITIF DE SÉCURITÉ, VÉHICULE ET PROCÉDÉ

(30) Priorität: 23.08.2018 DE 102018120599
(43) Veröffentlichungstag der Anmeldung: 26.02.2020
(73) Patentinhaber: Yazaki Systems Technologies GmbH, 93059 Regensburg (DE)
(72) Erfinder: RODERER, Götz, 93105 Regensburg (DE); CONRADS, Marco, 26605 Aurich (DE)
(74) Vertreter: Patentanwaltskanzlei WILHELM & BECK

(56) Entgegenhaltungen:
- EP-A1- 1 719 232
- EP-B1- 1 719 232
- EP-B1- 2 319 153
- DE-A1- 102012 102 664
- DE-A1- 102013 006 092
- US-A1- 2014 145 849

## Beschreibung

Die Erfindung betrifft eine Sicherungseinrichtung gemäß Patentanspruch 1, ein Fahrzeug gemäß Patentanspruch 11 und ein Verfahren gemäß Patentanspruch 14.

Diese Patentanmeldung beansprucht die Priorität der deutschen Patentanmeldung 10 2018 120 599.6 vom 23. August 2018.

Zur elektrischen Absicherung von elektrischen Leitungen werden im Kraftfahrzeug im Allgemeinen Schmelzsicherungen oder Sicherungsautomaten eingesetzt, die bei Auftreten eines Überstroms in einer Stromübertragung auslösen und die Stromübertragung über die elektrische Leitung unterbrechen. Je nach Auslösecharakteristik wird die Stromübertragung durch die Schmelzsicherung oder den Sicherungsautomaten innerhalb einer sehr geringen Zeitspanne, beispielsweise in 30 ms, ohne Vorwarnung unterbrochen. Um bei autonomen Fahrzeugen oder teilautonomen Fahrzeugen einen zuverlässigen autonomen oder teilautonomen Fahrbetrieb aufrechtzuerhalten, sind daher redundante Systeme notwendig, um bei Stromunterbrechung durch den Sicherungsautomaten oder der Schmelzsicherung in einem System den autonomen Fahrbetrieb oder den teilautonomen Fahrbetrieb mittels des anderen Systems aufrechtzuerhalten.

Aus DE 10 2013 006 092 A1 ist ein Steuergerät sowie ein Verfahren zur Reduktion eines Anwendererlebnisses von Koppeleffekten innerhalb eines elektrischen Netzes, insbesondere eines Bordnetzes eines Fortbewegungsmittels bekannt. Dabei wird eine Anforderung einer veränderten elektrischen Leistungsaufnahme für einen ersten Verbraucher innerhalb des Netzes festgestellt. Ferner wird eine für einen Anwender wahrnehmbare Auswirkung auf die Funktionsweise eines zweiten Verbrauchers für den Fall eines Erfüllens der Anforderung und im Ansprechen auf das Ermittlungsergebnis ermittelt. Des Weiteren wird das Anwendererlebnis durch allmähliches Herbeiführen der Auswirkung auf die Funktionsweise des zweiten Verbrauchers reduziert und/oder eine Leistungsaufnahme des zweiten Verbrauchers verändert. Der erste Verbraucher ist hierbei eine Heckscheibenheizung und der zweiter Verbraucher ist ein Heckwischer.

Aus US 2014/145849 A1 ist ein Verfahren zur Überwachung eines Betriebszustands einer elektrischen Komponente bekannt. Dabei wird eine Umgebungstemperatur, die der elektrischen Komponente zugeordnet ist, mittels eines Temperatursensors gemessen. Ferner wird ein Satz von Lastströmen eines elektrischen Leiters der elektrischen Komponente gemessen. Des Weiteren wird eine erwartete Temperaturkurve, die eine erwartete Temperatur über die Zeit anzeigt, basierend auf einem linearen Regressionsmodell unter Verwendung der Umgebungstemperatur und des Satzes von Lastströmen ermittelt. Ferner wird eine Warnschwellenwertkurve basierend auf einer ersten Standardabweichung von der erwarteten Temperaturkurve ermittelt. Ferner wird ein Satz von Temperaturen, die dem elektrischen Leiter zugeordnet ist, basierend auf der Warnschwellenwertkurve überwacht, um eine Betriebsbedingung der elektrischen Komponente zu bestimmen.

Aus EP 2 319 153 B ist eine Vorrichtung und ein Verfahren zum optimierten Energiemanagement eines elektrischen Systems bekannt.

Es ist Aufgabe der Erfindung, eine verbesserte Sicherungseinrichtung, ein verbessertes Fahrzeug und ein verbessertes Verfahren zum Betrieb solch eines Fahrzeugs bereitzustellen.

Diese Aufgabe wird mittels einer Sicherungseinrichtung gemäß Patentanspruch **1,** eines verbesserten Fahrzeugs gemäß Patentanspruch 11 und eines verbesserten Verfahrens gemäß Patentanspruch 14 gelöst. Vorteilhafte Ausführungsformen sind in den abhängigen Ansprüchen angegeben.

Es wurde erkannt, dass eine verbesserte Sicherungseinrichtung für ein Kraftfahrzeug dadurch bereitgestellt werden kann, dass die Sicherungseinrichtung ein Steuergerät, eine Ermittlungseinheit und eine elektrische Leitung mit einem elektrischen Leiter aufweist, wobei das Steuergerät eine Steuereinheit und eine mit der Steuereinheit verbundene Schnittstelle aufweist, wobei die elektrische Leitung ausgebildet ist, eine elektrische Energie zu einem sicherheitskritischen Verbraucher zu übertragen, wobei die Ermittlungseinheit mit der Steuereinheit verbunden und ausgebildet ist, eine Information über einen Betriebsparameter des elektrischen Leiters zu ermitteln und die Information der Steuereinheit bereitzustellen, wobei die Steuereinheit ausgebildet ist, die ermittelte Information zu erfassen, wobei die Steuereinheit ausgebildet ist, auf Grundlage der Information des Betriebsparameters und eines vordefinierten Parametermodells eine Gleichgewichtstemperatur des elektrischen Leiters zu errechnen, wobei die Steuereinheit ausgebildet ist, die ermittelte Gleichgewichtstemperatur mit einem vordefinierten Schwellenwert zu vergleichen, wobei die Steuereinheit ausgebildet ist, bei Überschreiten des vordefinierten Schwellenwerts ein Warnsignal mit einer Warninformation an der Schnittstelle bereitzustellen.

Das Steuergerät weist wenigstens einen Datenspeicher auf, wobei in dem Datenspeicher wenigstens ein erstes Leitertemperaturfenster und ein zweites Leitertemperaturfenster abgelegt ist, wobei das erste Leitertemperaturfenster mit einem Dauerbetrieb der elektrischen Leitung korreliert, wobei das zweite Leitertemperaturfenster oberhalb des ersten Leitertemperaturfensters liegt, wobei die Steuereinheit ausgebildet ist, auf Grundlage der Information über den Betriebsparameter, eines vordefinierten Parameters und einer oberen Grenztemperatur des zweiten Leitertemperaturfensters für den elektrischen Leiter ein erstes Vorhersagezeitintervall zu ermitteln, in dem eine Leitertemperatur des elektrischen Leiters die obere Grenztemperatur des zweiten Leitertemperaturfensters voraussichtlich erreicht, wobei die Steuereinheit ausgebildet ist, eine erste Zeitintervallinformation über das erste Vorhersagezeitintervall an der Schnittstelle bereitzustellen. Das erste Vorhersagezeitintervall kann dazu genutzt werden den Fahrzeugführer über den bevorstehenden Ausfall zu warnen. Ferner kann in dem ersten Vorhersagezeitintervall beispielsweise eine gewünschte Handlung des Fahrzeugführers ohne weitere Beeinträchtigung des Fahrzeugs vorgenommen werden. So kann beispielsweise innerhalb des ersten Vorhersagezeitintervalls bei einem autonomen oder teilautonomen Fahrbetrieb die Fahrzeugführung vom Fahrzeugführer übernommen werden.

Diese Ausgestaltung hat den Vorteil, dass vor Unterbrechung der Übertragung der elektrischen Energie über den elektrischen Leiter eine Warninformation bereitgestellt wird, die bei der Ansteuerung weiterer Komponenten des Fahrzeugs berücksichtigt werden kann. Insbesondere kann dadurch der sofortige Ausfall des mit der elektrischen Energie versorgten sicherheitskritischen Verbrauchers vermieden werden. Auch kann dadurch auf redundante sicherheitskritische Verbraucher verzichtet werden.

In einer weiteren Ausführungsform ist die Schnittstelle ausgebildet, eine Information über eine Umgebungstemperatur des Fahrzeugs zu erfassen, wobei die Steuereinheit ausgebildet ist, auf Grundlage der ermittelten Information, der Umgebungstemperatur und eines weiteren vordefinierten Parameters eine Leitertemperatur zu ermitteln.

In einer weiteren Ausführungsform umfasst die Ermittlungseinheit einen Temperatursensor, wobei der Temperatursensor an oder zumindest abschnittsweise in der elektrischen Leitung angeordnet ist und als Betriebsparameter des elektrischen Leiters eine Leitertemperatur des elektrischen Leiters misst, wobei der Temperatursensor eine zur Leitertemperatur korrelierende Temperaturinformation als Information über den Betriebsparameter des elektrischen Leiters der Steuereinheit bereitstellt.

In einer weiteren Ausführungsform ist in dem Datenspeicher wenigstens ein drittes Leitertemperaturfenster abgelegt, wobei das dritte Leitertemperaturfenster oberhalb des zweiten Leitertemperaturfenster liegt, wobei die Steuereinheit ausgebildet ist, auf Grundlage der Information des Betriebsparameters, des vordefinierten Parameters und einer weiteren oberen Grenztemperatur des dritten Leitertemperaturfensters für den elektrischen Leiter ein zweites Vorhersagezeitintervall zu ermitteln, in dem die Leitertemperatur des elektrischen Leiters die weitere obere Grenztemperatur voraussichtlich erreicht, wobei die Steuereinheit ausgebildet ist, eine zweite Zeitintervallinformation über das zweite Vorhersagezeitintervall an der Schnittstelle bereitzustellen.

In einer weiteren Ausführungsform weist die Sicherungseinrichtung eine Schalteinrichtung auf, wobei die Schalteinrichtung mit dem elektrischen Leiter elektrisch verbunden ist, wobei die Steuereinheit mit der Schalteinrichtung verbunden ist, wobei in einem ersten Schaltzustand die Schalteinrichtung eine Übertragung elektrischer Energie über den elektrischen Leiter erlaubt, wobei in einem zweiten Schaltzustand die Schalteinrichtung die Übertragung elektrischer Energie über den elektrischen Leiter unterbricht, wobei die Steuereinheit ausgebildet ist, die ermittelte Leitertemperatur mit der weiteren oberen Grenztemperatur zu vergleichen, wobei bei Überschreiten der weiteren oberen Grenztemperatur die Steuereinheit die Schalteinrichtung derart steuert, dass die Schalteinrichtung von dem ersten Schaltzustand in den zweiten Schaltzustand wechselt.

In einer weiteren Ausführungsform weist die Ermittlungseinheit eine Schalteinrichtung auf, wobei die Schalteinrichtung mit dem elektrischen Leiter elektrisch verbunden ist, wobei die Steuereinheit mit der Schalteinrichtung verbunden ist, wobei in einem ersten Schaltzustand die Schalteinrichtung eine Übertragung elektrischer Energie über den elektrischen Leiter erlaubt, wobei in einem zweiten Schaltzustand die Schalteinrichtung die Übertragung elektrischer Energie über den elektrischen Leiter unterbricht, wobei die Schalteinrichtung ausgebildet ist, als Betriebsparameter des elektrischen Leiters einen über die Schalteinrichtung übertragenen elektrischen Strom zu ermitteln und der Steuereinheit die Information über den übertragenen elektrischen Strom des Betriebsparameters des elektrischen Leiters bereitzustellen.

In einer weiteren Ausführungsform ist die Steuereinheit ausgebildet, die ermittelte aktuelle Leitertemperatur mit einer unteren Grenztemperatur des zweiten Leitertemperaturfensters zu vergleichen, wobei die Steuereinheit ausgebildet ist, bei Überschreiten der unteren Grenztemperatur des zweiten Leitertemperaturfensters an der Schnittstelle ein weiteres Warnsignal mit einer weiteren Warnformation über das Überschreiten der unteren Grenztemperatur des zweiten Leitertemperaturfensters bereitzustellen. Dadurch kann auf die nahende thermische Überlastung der elektrischen Leitung besonders deutlich hingewiesen werden.

In einer weiteren Ausführungsform ist die Steuereinheit ausgebildet, eine Nutzungsdauer der elektrischen Leitung innerhalb des zweiten Leitertemperaturfensters auf Grundlage der ermittelten aktuellen Leitertemperatur zu ermitteln, wobei die Steuereinheit ausgebildet ist, die ermittelte Nutzungsdauer mit einer im Datenspeicher abgespeicherten Gesamtnutzungsdauer zu einer aktualisierten Gesamtnutzungsdauer zu summieren, wobei die Steuereinheit ausgebildet ist, an der Schnittstelle eine Information über die aktualisierte Gesamtnutzungsdauer bereitzustellen. Dadurch kann die aktuelle **Ab**nutzung/Verschleiß der elektrischen Leitung auf Grundlage der Gesamtnutzungsdauer ermittelt werden.

In einer weiteren Ausführungsform ist die Steuereinheit ausgebildet, zeitlich nach Überschreiten der oberen Grenztemperatur des dritten Leitertemperaturfensters die ermittelte aktuelle Leitertemperatur mit einer vordefinierten Erholungstemperatur zu vergleichen, wobei die vordefinierte Erholungstemperatur vorzugsweise geringer als die obere Grenztemperatur des zweiten Leitertemperaturfensters oder des ersten Leitertemperaturfensters ist, wobei die Steuereinheit ausgebildet ist, bei Unterschreiten der Erholungstemperatur die Schalteinrichtung derart zu steuern, dass die Schalteinrichtung vom zweiten Schaltzustand in den ersten Schaltzustand wechselt.

In einer weiteren Ausführungsform ist die Steuereinheit ausgebildet, die ermittelte Gesamtnutzungsdauer mit einer maximalen Betriebsdauer der elektrischen Leitung im zweiten Leitertemperaturfenster zu vergleichen, wobei die Steuereinheit ausgebildet ist, bei Überschreiten der maximalen Betriebsdauer durch die aktualisierte Gesamtnutzungsdauer nach Unterschreiten der Erholungstemperatur die Schalteinrichtung derart zu steuern, dass die Schalteinrichtung im zweiten Schaltzustand verbleibt. Dadurch kann der Betrieb des sicherheitskritischen Verbrauchers erst wieder aufgenommen werden, wenn die elektrische Leitung abgekühlt ist.

Ein Fahrzeug weist die Sicherungseinrichtung, einen sicherheitskritischen Verbraucher, ein Fahrzeugsteuergerät und eine Komponente auf, wobei die Sicherungseinrichtung wie oben beschrieben ausgebildet ist, wobei der elektrische Leiter mit dem sicherheitskritischen Verbraucher elektrisch verbunden und ausgebildet ist, elektrische Energie für den sicherheitskritischen Verbraucher zu übertragen, wobei das Fahrzeugsteuergerät mit der Schnittstelle und mit dem sicherheitskritischen Verbraucher verbunden ist, wobei das Fahrzeugsteuergerät ausgebildet ist, die Komponente auf Grundlage einer Information des sicherheitskritischen Verbrauchers zu steuern, wobei das Fahrzeugsteuergerät ausgebildet ist, das Warnsignal mit der Warninformation zu erfassen und die Warninformation bei der Steuerung der Komponente zu berücksichtigen.

In einer weiteren Ausführungsform weist das Fahrzeug eine Ausgabeeinrichtung auf, wobei das Fahrzeugsteuergerät mit der Ausgabeeinrichtung verbunden ist, wobei das Fahrzeugsteuergerät ausgebildet ist, auf Grundlage der Warninformation die Ausgabeeinrichtung derart zu steuern, dass die Ausgabeeinrichtung eine Warnmeldung für einen Fahrzeugführer des Fahrzeugs ausgibt. Zusätzlich oder alternativ und/oder kann die Warninformation das Fahrzeugsteuergerät bei einem Steuern des Fahrzeugs insbesondere bei Steuerung des Fahrzeugs im autonomen oder teilautonomen Fahrbetrieb berücksichtigt. Dabei kann beispielsweise das Fahrzeugsteuergerät das Fahrzeug derart steuern, dass dieses nach der Warninformation einen nächstliegenden Parkplatz ansteuert.

In einer weiteren Ausführungsform weist das Fahrzeug eine Eingabeeinrichtung auf, wobei die Eingabeeinrichtung mit dem Fahrzeugsteuergerät verbunden ist, wobei das Fahrzeugsteuergerät ausgebildet ist, auf Grundlage der Warninformation die Ausgabeeinrichtung derart anzusteuern, dass die Ausgabeeinrichtung eine Nutzerabfrage für den Fahrzeugführer bereitstellt, wobei die Eingabeeinrichtung ausgebildet ist, eine Eingabe durch den Fahrzeugführer auf die Nutzerabfrage zu erfassen, wobei das Fahrzeugsteuergerät ausgebildet ist, in **Ab**hängigkeit der Eingabe die Schalteinrichtung zu steuern.

Ein besonders gutes Verfahren zum Betrieb der oben beschriebenen Sicherungseinrichtung und/oder des oben beschriebenen Fahrzeugs kann dadurch bereitgestellt werden, dass über eine elektrische Leitung eine elektrische Energie zu einem sicherheitskritischen Verbraucher zur Energieversorgung des sicherheitskritischen Verbrauchers übertragen wird, wobei bei Übertragung der elektrischen Energie sich die elektrische Leitung zumindest abschnittsweise erwärmt, wobei eine ein Betriebsparameter eines elektrischen Leiters der elektrischen Leitung ermittelt wird, wobei auf Grundlage der Information des Betriebsparameters und eines vordefinierten Parametermodells eine Gleichgewichtstemperatur des elektrischen Leiters zu errechnen, die ermittelte Gewichtstemperatur mit einem vordefinierten Schwellenwert verglichen wird, wobei bei Überschreiten des vordefinierten Schwellenwerts ein Warnsignal mit einer Warninformation an der Schnittstelle bereitgestellt wird.

Auf Grundlage der Information wird über den Betriebsparameter, eines vordefinierten Parameters und einer oberen Grenztemperatur des zweiten Leitertemperaturfensters für den elektrischen Leiter ein erstes Vorhersagezeitintervall ermittelt, in dem eine Leitertemperatur des elektrischen Leiters die obere Grenztemperatur des zweiten Leitertemperaturfensters voraussichtlich erreicht. Eine erste Zeitintervallinformation über das erste Vorhersagezeitintervall wird an der Schnittstelle bereitgestellt. Die Zeitintervallinformation kann Warnung des Fahrzeugführers genutzt werden und/oder innerhalb des Zeitintervalls könnten weitere erforderliche Aktivitäten durchgeführt werden. So kann beispielsweise das Steuergerät auch innerhalb des Zeitintervalls Informationen an ein weiteres Steuergerät weitergeben um einen Datenverlust zu vermeiden. Dadurch kann auch ein Verteiltes Rechnen über verschiedene Steuergeräte hinweg unterstützt werden. Sollte eine redundante Komponente zu der Ausfallenden Komponente vorhanden sein, so kann die redundante Komponente innerhalb des ersten Zeitintervalls aktiviert werden.

Nachfolgend wird die Erfindung anhand von Figuren näher erläutert. Dabei zeigen:
Figur 1 eine schematische Darstellung eines Fahrzeugs gemäß einer ersten Ausführungsform;
Figur 2 eine schematische Darstellung einer ersten elektrischen Leitung und einer Ermittlungseinheit des in Figur 1 gezeigten Fahrzeugs;
Figur 3 ein Ablaufdiagramm eines Verfahrens zum Betrieb des in Figur 1 gezeigten Fahrzeugs;
Figur 4 ein Stromprofil eines Stroms in der elektrischen Leitung aufgetragen über der Zeit;
Figur 5 einen Verlauf einer Leitertemperatur in Abhängigkeit des in Figur 4 gezeigten Stromverlaufs aufgetragen über der Zeit;
Figur 6 eine schematische Darstellung eines Fahrzeugs gemäß einer zweiten Ausführungsform; und
Figur 7 eine schematische Darstellung eines Fahrzeugs gemäß einer dritten Ausführungsform.

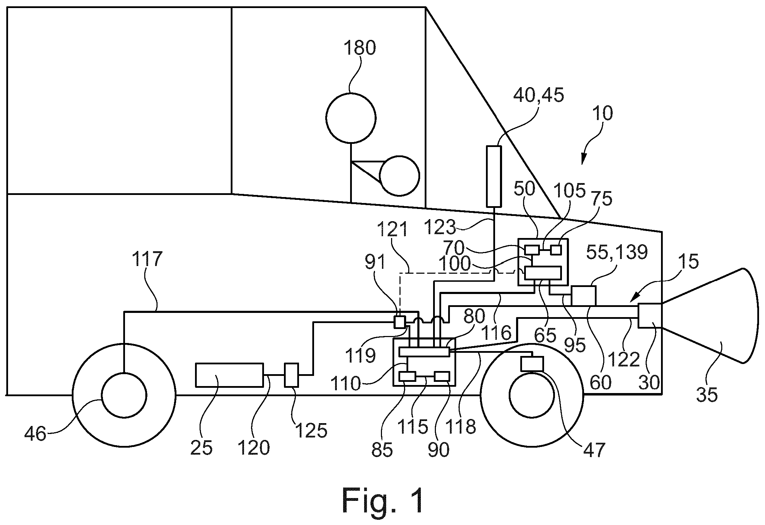

Figur 1 zeigt eine schematische Darstellung eines Fahrzeugs 10 gemäß einer ersten Ausführungsform.

Das Fahrzeug 10 ist vorzugsweise als autonom fahrendes Fahrzeug ausgebildet und weist beispielhaft eine Sicherungseinrichtung 15, ein Fahrzeugsteuergerät 20, eine elektrische Energiequelle 25 und wenigstens einen sicherheitskritischen Verbraucher 30 auf. Selbstverständlich kann das Fahrzeug 10 eine Mehrzahl von sicherheitskritischen Verbrauchern 30 aufweisen. Dabei wird unter sicherheitskritisch verstanden, dass ein Ausfall oder ein fehlerhafter Verbraucher 30 nicht nur die Folge hat, dass die Funktion des Verbrauchers 30 selbst eingeschränkt ist oder ausfällt, sondern auch einen Ausfall oder einen eingeschränkten Betrieb weiterer funktionsfähiger Systeme zur Folge hat.

In der Ausführungsform ist der Verbraucher 30 als Sensoreinrichtung, insbesondere als Radar- oder Lidarsensor, ausgebildet und ist ausgebildet, einen Fahrraum 35 vor dem Fahrzeug 10 abzutasten und Informationen über im Fahrraum 35 befindliche Objekte, beispielsweise Fahrzeugen, Personen, Schildern oder Ähnliches, zu erfassen. Auch kann beispielsweise der sicherheitskritische Verbraucher 30 als Kamera ausgebildet sein. Auch könnte der Verbraucher 30 beispielsweise eine elektrische Fahrzeugbremse oder ein Steuergerät des Fahrzeugs 10 sein.

Die elektrische Energiequelle 25 kann einen Generator und/oder einen elektrischen Energiespeicher, insbesondere eine Fahrzeugbatterie, aufweisen. Zusätzlich weist das Fahrzeug 10 eine Ausgabeeinrichtung 40 und eine Eingabeeinrichtung 45 auf. Die Ausgabeeinrichtung 40 ist in der Ausführungsform als berührungssensitiver Monitor ausgebildet, sodass die Eingabeeinrichtung 45 und die Ausgabeeinrichtung 40 in einem Gerät vereint sind. Auch könnte die Eingabeeinrichtung 45 ein Mikrofon mit einer Spracherkennungseinrichtung umfassen. Auch kann die Eingabeeinrichtung 45 auch eine Sensoreinrichtung sein, die erfasst, ob der Fahrzeugführer 180 das Lenkrad des Fahrzeugs 10 hält. Selbstverständlich ist auch denkbar, dass die Ausgabeeinrichtung 40 und die Eingabeeinrichtung 45 getrennt ausgebildet sind.

Das Fahrzeug 10 weist ferner weitere Komponenten wie eine Antriebseinrichtung 46 und eine Lenkeinrichtung 47 auf. Die Antriebseinrichtung 46 ist ausgebildet, eine Antriebskraft zum Antrieb des Fahrzeugs 10 bereitzustellen. Die Antriebseinrichtung 46 kann beispielsweise einen Verbrennungsmotor mit einer Übersetzungseinrichtung aufweisen, der auf Räder des Fahrzeugs 10 wirkt. Auch kann die Antriebseinrichtung 46 als Hybridmotor ausgebildet sein. Alternativ wäre auch denkbar, dass die Antriebseinrichtung 46 wenigstens eine elektrische Maschine umfasst, die beispielsweise als Radnabenmotor ausgebildet ist.

Die Lenkeinrichtung 47 ist ausgebildet, eine Richtung des Fahrzeugs 10, in der das Fahrzeug 10 bewegt wird, zu steuern. Die Lenkeinrichtung 47 kann beispielsweise einen Lenkaktuator aufweisen, der beispielsweise mit einer Servolenkung zusammenwirkt, um beispielsweise Vorderräder des Fahrzeugs 10 in ihre Richtung zu verdrehen.

Die Sicherungseinrichtung 15 umfasst ein Steuergerät 50, eine Ermittlungseinheit 55, eine erste elektrische Leitung 60 und eine Schalteinrichtung 91. Die Schalteinrichtung 91 kann beispielsweise einen Schalter oder ein Halbleiterbauelement, insbesondere einen Smart-High-Side-Power-Switch, umfassen. Auch ein anderes Halbleiterbauelement, wie beispielsweise ein MOS-FET, wäre denkbar. Die Schalteinrichtung 91 weist wenigstens einen ersten Schaltzustand und einen zweiten Schaltzustand auf.

Das Steuergerät 50 weist eine erste Schnittstelle 65, eine erste Steuereinheit 70 und einen ersten Datenspeicher 75 auf. Das Fahrzeugsteuergerät 20 weist eine zweite Schnittstelle 80, eine zweite Steuereinheit 85 und einen zweiten Datenspeicher 90 auf.

Die Ermittlungseinheit 55 ist mittels einer ersten Verbindung 95 mit der ersten Schnittstelle 65 verbunden. Ferner ist die erste Schnittstelle 65 mittels einer zweiten Verbindung 100 mit der ersten Steuereinheit 70 verbunden. Die erste Steuereinheit 70 ist des Weiteren mittels einer dritten Verbindung 105 mit dem ersten Datenspeicher 75 verbunden.

Die erste elektrische Leitung 60 verbindet den sicherheitskritischen Verbraucher 30 mit der Schalteinrichtung 91 elektrisch. Des Weiteren ist die zweite Schnittstelle 80 mittels einer vierten Verbindung 110 mit der zweiten Steuereinheit 85 und die zweite Steuereinheit 85 ist ferner mittels einer fünften Verbindung 115 mit dem zweiten Datenspeicher 90 verbunden. Des Weiteren ist die erste Schnittstelle 65 mittels einer sechsten Verbindung 116 mit der zweiten Schnittstelle 80 verbunden. Die Antriebseinrichtung 46 ist mittels einer siebten Verbindung 117 mit der zweiten Schnittstelle 80 verbunden. Die Lenkeinrichtung 47 ist mittels einer achten Verbindung 118 mit der zweiten Schnittstelle 80 verbunden. Die Schalteinrichtung 91 ist mittels einer neunten Verbindung 119 mit der zweiten Schnittstelle 80 verbunden. Zusätzlich oder alternativ zu der neunten Verbindung 119 kann die Schalteinrichtung 91 mittels einer zehnten Verbindung 121 mit der ersten Schnittstelle 65 verbunden sein (strichliert in Figur 1 dargestellt). Mittels einer elften Verbindung 122 ist der sicherheitskritische Verbraucher 30 mit der zweiten Schnittstelle 80 verbunden. Mittels einer zwölften Verbindung 123 ist die Ein- und Ausgabeeinrichtung 40, 45 mit der zweiten Schnittstelle 85 verbunden. Ferner kann ein Umgebungstemperatursensor vorgesehen sein, der mittels einer dreizehnten Verbindung mit der Schnittstelle 80 verbunden ist.

Die Schalteinrichtung 91 ist des Weiteren mittels einer zweiten elektrischen Leitung 120 mit der elektrischen Energiequelle 25 elektrisch verbunden. Die zweite elektrische Leitung 120 kann über eine zusätzliche weitere Sicherungseinrichtung 125 abgesichert sein. Die weitere Sicherungseinrichtung 125 trennt beispielsweise galvanisch. Die weitere Sicherungseinrichtung 125 kann beispielsweise eine Schmelzsicherung oder ein Sicherungsautomat sein.

Die erste elektrische Leitung 60 und die zweite elektrische Leitung 120 sind ausgebildet, elektrische Energie zwischen der Energiequelle 25 und dem sicherheitskritischen Verbraucher 30 zur Energieversorgung des elektrischen Verbrauchers 30 zu übertragen. Die erste bis zwölfte Verbindung 95, 100, 105, 110, 115, 116, 117, 118, 119, 121, 122, 123 sind als Datenverbindung ausgebildet. Die erste bis zwölfte Verbindung 95, 100, 105, 110, 115, 116, 117, 118, 119, 121, 122, 123 kann drahtlos oder drahtgebunden ausgebildet sein. Auch kann die erste bis zwölfte Verbindung 95, 100, 105, 110, 115, 116, 117, 118, 119, 121, 122, 123, auch durch ein Bussystem, beispielsweise einen CAN-Bus des Fahrzeugs 10, ausgebildet sein.

Im ersten Datenspeicher 75 ist ein vordefinierter Schwellenwert S₁, wenigstens ein erstes Leitertemperaturfenster 140, ein zweites Leitertemperaturfenster 145 und eine vordefinierte Erholungstemperatur T_{E} abgespeichert. Ferner ist denkbar, dass wenigstens ein drittes vordefiniertes Leitertemperaturfenster 146 in dem ersten Datenspeicher 75 abgespeichert ist. Die Anzahl der Leitertemperaturfenster 140, 145, 146 ist beispielhaft. Auch kann die Anzahl der Leitertemperaturfenster 140, 145, 146 andersartig gewählt werden. Des Weiteren sind im Datenspeicher 75 ein Parametermodell und ein vordefinierter Parameter abgespeichert. Das Parametermodell und/oder der vordefinierte Parameter kann ein vordefinierter Algorithmus, eine tabellarische Zuordnung, ein Computerprogramm, eine mathematische Formel und/oder ein Kennfeld umfassen.

In dem zweiten Datenspeicher 90 ist ein vordefiniertes Steuerverfahren, beispielsweise ein Computerprogramm, abgelegt, auf dessen Grundlage und auf Grundlage einer Information des sicherheitskritischen Verbrauchers 30 die zweite Steuereinheit 85 die Antriebseinrichtung 46 und/oder die Lenkeinrichtung 47 steuert.

In der Ausführungsform ist das Steuerverfahren derart ausgebildet, dass das Fahrzeug 10 in einem teilautonomen Fahrbetrieb und/oder einem autonomen Fahrbetrieb durch das Steuerverfahren gesteuert wird. Im autonomen Fahrbetrieb ist ein Fahrzeugführer 180 von einer Fahrzeugführung des Fahrzeugs 10 befreit, sodass ihm währenddessen Freiheiten gegeben sind und der Fahrzeugführer 180 nicht fortwährend die Kontrolle über das Fahrzeug 10 hat. Als Zwischenschritt zwischen einer manuellen Fahrzeugführung und dem autonomen Fahrbetrieb kann der teilautonome Fahrbetrieb angesehen werden. Im teilautonomen Fahrbetrieb übernimmt in einer vordefinierten Situation, wie bei beispielsweise einer Autobahn- oder Staufahrt, das Fahrzeugsteuergerät 20 auf Anweisung des Fahrzeugführers 180 die Fahrzeugführung. Über die Eingabeeinrichtung 45 kann der Fahrzeugführer 180 auch die Fahrzeugführung im autonomen Fahrbetrieb oder teilautonomen Fahrbetrieb auf den manuellen Fahrbetrieb schalten und den (teil-)autonomen Fahrbetrieb beenden.

Unabhängig, ob das Fahrzeug 10 im teilautonomen Fahrbetrieb oder im autonomen Fahrbetrieb betrieben wird, ist das Fahrzeugsteuergerät 20 ausgebildet, bei Vorliegen eines Fehlers, den das Fahrzeugsteuergerät 20 nicht ohne weiteres kompensieren kann, die Verantwortung für die Fahrzeugführung wieder dem Fahrzeugführer 180 zu übergeben. Im autonomen Fahrbetrieb ist der Fahrzeugführer 180 nicht dauerhaft in die Fahrzeugführung eingebunden. Dadurch benötigt der Fahrzeugführer 180 ein größeres Zeitintervall zur Übernahme der Fahrzeugführung als bei einer Übernahme aus dem teilautonomen Fahrbetrieb. Die Übergabe vom autonomen Fahrbetrieb auf einen manuellen Fahrbetrieb kann beispielsweise nach Aufforderung im Rahmen einer Nutzerabfrage der Ausgabeeinrichtung 40 und durch Beantworten der Nutzerabfrage über die Eingabeeinrichtung 45 erfolgen.

Im teilautonomen Fahrbetrieb oder autonomen Fahrbetrieb ist eine geringe Ausfallwahrscheinlichkeit der sicherheitskritischen Komponenten des Fahrzeugs 10 sicherzustellen. Dies kann beispielweise durch das Vorsehen von redundanten Komponenten erreicht werden. Besonders für die Energieversorgung im Fahrzeug 10 sind Robustheit und Redundanz von hoher Bedeutung, damit bei einem Fehler weiterhin die wichtigsten Funktionen, wie der sicherheitskritische Verbraucher 30, die Lenkeinrichtung 47 und die Antriebsrichtung 46, zur Verfügung stehen.

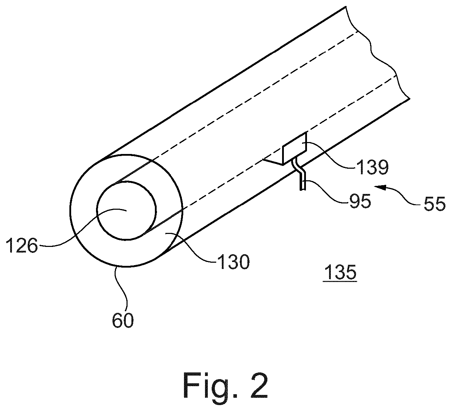

Figur 2 zeigt eine schematische Darstellung der ersten elektrischen Leitung 60 und der Ermittlungseinheit 55.

Die erste elektrische Leitung 60 weist einen elektrischen Leiter 126 und eine Ummantelung 130 auf. Der elektrische Leiter 126 ist elektrisch leitend ausgebildet und kann eine oder mehrere Litzen aufweisen, die bündelförmig zusammengefasst sein können. Der elektrische Leiter 126 kann aber auch aus einem Einzeldraht bestehen. Der elektrische Leiter 126 wird durch die Ummantelung 130 ummantelt und gegenüber einer Umgebung 135 elektrisch isoliert. Die Ummantelung 130 weist einen elektrisch nichtleitenden Werkstoff auf, der häufig auch eine geringere Wärmeleitfähigkeit aufweist als der elektrische Leiter 126. Der elektrische Leiter 126 ist ausgebildet, die elektrische Energie zur Versorgung des sicherheitskritischen Verbrauchers 30 zu übertragen. Zusätzlich kann über den elektrischen Leiter 126 auch die Datenübertragung erfolgen. Die Datenübertragung kann aber auch getrennt von dem elektrischen Leiter 126 erfolgen.

In der Ausführungsform weist die Ermittlungseinheit 55 einen Temperatursensor 139 auf. Der Temperatursensor 139 ist beispielhaft in der Ummantelung 130 eingebettet und vorzugsweise direkt anliegend an dem elektrischen Leiter 126 angeordnet. Der Temperatursensor 139 ist ausgebildet, als Betriebsparameter des elektrischen Leiters 126 eine Leitertemperatur T des elektrischen Leiters 126 zu messen. Der Temperatursensor 139 stellt in Abhängigkeit der gemessenen Leitertemperatur T des elektrischen Leiters 126 eine Information des Betriebsparameters, in der Ausführungsform eine Temperaturinformation, über die erste Verbindung 95 der ersten Schnittstelle 65 bereit.

Die Ermittlungseinheit 55 kann aber auch andersartig ausgebildet sein. Insbesondere ist denkbar, dass anstatt der in Figur 2 gezeigten Anordnung des Temperatursensors 139 direkt angrenzend an den elektrischen Leiter 126 der Temperatursensor 139 auch in der Ummantelung 130 benachbart, beispielsweise mit geringem Abstand zu dem elektrischen Leiter 126, angeordnet ist, sodass zwischen dem Temperatursensor 139 und dem elektrischen Leiter 126 zumindest eine Schicht der Ummantelung 130 angeordnet ist.

Alternativ ist der Temperatursensor 139 außenseitig an der Ummantelung 130 angeordnet. Diese kostengünstigere und einfachere Ausgestaltung gegenüber der oben beschriebenen Anordnung des Temperatursensors 139 direkt angrenzend an den elektrischen Leiter 126 hat jedoch den Nachteil, dass die Leitertemperatur T zeitlich verzögert gegenüber der oben beschrieben bevorzugten Anordnung direkt an dem elektrischen Leiter 126 gemessen wird. Der Temperatursensor 139 ist vorzugsweise in einem Bereich (in Längsrichtung) der ersten elektrischen Leitung 60 angeordnet, die am stärksten temperaturbelastet ist.

Die Ummantelung 130 weist in Abhängigkeit ihres Werkstoffs eine vordefinierte Temperaturbeständigkeit auf, die sich je nach Norm (beispielsweise ISO 6722) in verschiedene Temperaturklassen gliedert. Jede der Temperaturklassen weist eine maximale Ummantelungstemperatur auf, die nicht überschritten werden sollte, um einen irreparablen Schaden an der Ummantelung 130 zu vermeiden. Das temperaturkritische Element der ersten elektrischen Leitung 60 ist im Wesentlichen somit nicht der elektrische Leiter 126 selbst (beispielsweise wenn der elektrische Leiter 126 Kupfer oder Aluminium als Leiterwerkstoff aufweist), sondern der Werkstoff der Ummantelung 130.

Die Temperaturklasse selbst gliedert sich in die oben genannten Leitertemperaturfenster 140, 145, 146 auf. Das erste Leitertemperaturfenster 140 wird durch eine erste untere Grenztemperatur T_{UG1} und durch eine erste obere Grenztemperatur T_{OG1} begrenzt. Das zweite Leitertemperaturfenster 145 ist oberhalb des ersten Leitertemperaturfensters 140 angeordnet und weist eine zweite untere Grenztemperatur T_{UG2} auf. Zusätzlich kann das zweite Leitertemperaturfenster 145 eine zweite obere Grenztemperatur T_{OG2} aufweisen, die das zweite Leitertemperaturfenster 145 oberseitig begrenzt. Das dritte Leitertemperaturfenster 146 ist oberhalb des zweiten Leitertemperaturfensters 145 angeordnet und weist eine dritte untere Grenztemperatur T_{UG3} auf. Zusätzlich kann das dritte Leitertemperaturfenster 146 eine dritte obere Grenztemperatur T_{OG3} aufweisen, die das dritte Leitertemperaturfenster 146 oberseitig begrenzt. Die erste obere Grenztemperatur T_{OG1} kann gleich der zweiten unteren Grenztemperatur T_{UG2} sein. Die zweite obere Grenztemperatur T_{OG2} kann gleich der dritten unteren Grenztemperatur T_{UG3} sein. Die erste untere Grenztemperatur T_{UG1} ist geringer als die erste obere Grenztemperatur T_{OG1}. Die zweite untere Grenztemperatur T_{UG2} ist geringer als die zweite obere Grenztemperatur T_{OG2}. Die dritte untere Grenztemperatur T_{UG3} ist geringer als die dritte obere Grenztemperatur T_{OG3}.

So kann in einem Beispiel die erste untere Grenztemperatur T_{UG1} = -40° C und die erste obere Grenztemperatur T_{OG1} = +105° C, die zweite untere Grenztemperatur T_{UG2} = +105° C und die zweite obere Grenztemperatur T_{OG2} = +130° C und die dritte untere Grenztemperatur T_{UG3} = +130° C und die dritte obere Grenztemperatur T_{OG3} = +155° C betragen.

Jedem Leitertemperaturfenster 140, 145, 146 ist ferner eine maximale Betriebsdauer zugewiesen, in der die erste elektrische Leitung 60 betrieben werden darf. Wird die erste elektrische Leitung 60 über eine der maximalen Betriebsdauern hinaus betrieben, ist die erste elektrische Leitung 60 beschädigt und ist zu tauschen. Dabei ist dem ersten Leitertemperaturfenster 140 eine erste maximale Betriebsdauer t_{B1}, dem zweiten Leitertemperaturfenster 145 eine zweite maximale Betriebsdauer t_{B2} und gegebenenfalls dem dritten Leitertemperaturfenster 146 eine dritte maximale Betriebsdauer t_{B3} zugeordnet. Die erste maximale Betriebsdauer t_{B1} ist länger als die zweite und dritte maximale Betriebsdauer t_{B2}, t_{B3}. Die zweite maximale Betriebsdauer t_{B2} ist länger als die dritte maximale Betriebsdauer t_{B3}. Die erste maximale Betriebsdauer t_{B1} kann auch als Dauerbetriebsdauer bezeichnet werden. Die erste maximale Betriebsdauer t_{B1} kann beispielsweise 3000 h, die zweite maximale Betriebsdauer t_{B2} kann 240 h und die dritte maximale Betriebsdauer t_{B3} kann 6 h betragen. Die dritte maximale Betriebsdauer t_{B3} für das dritte Leitertemperaturfenster 146 ist besonders kurz, da durch die hohe Temperatur der ersten elektrischen Leitung 60, wenn sie im dritten Leitertemperaturfenster 146 betrieben wird, besonders schnell die Ummantelung 130 verschlissen wird, beispielsweise wenn vorhandene Weichmacher in der Ummantelung 130 aus der Ummantelung 130 heraustreten oder Polymerketten eines Kunststoffs der Ummantelung 130 durch die hohe Temperatur der ersten elektrischen Leitung 60 zerstört werden.

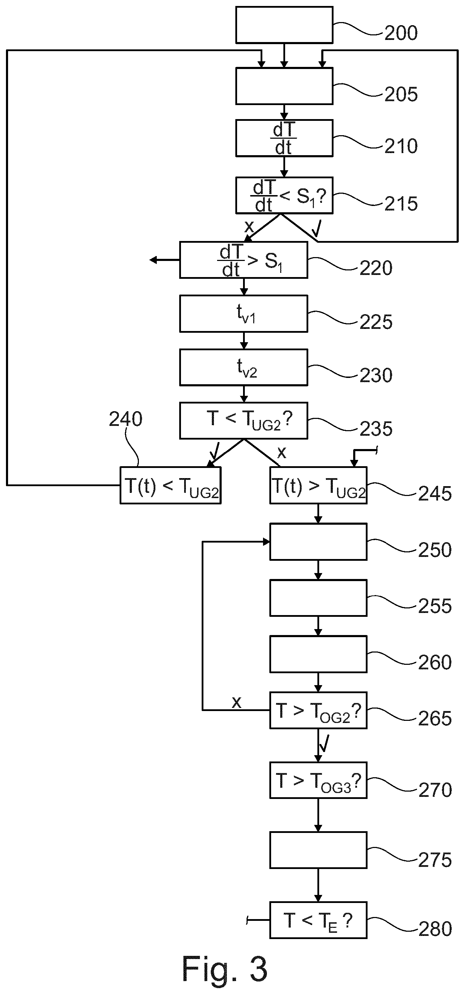

Figur 3 zeigt ein Ablaufdiagramm zum Betrieb der Sicherungseinrichtung 15 und dem Fahrzeug 10. Dabei sind in Figur 3 die Erfüllung einer Bedingung mittels eines Häkchens und die Nichterfüllung der Bedingung mittels eines Kreuzchens symbolisch markiert.

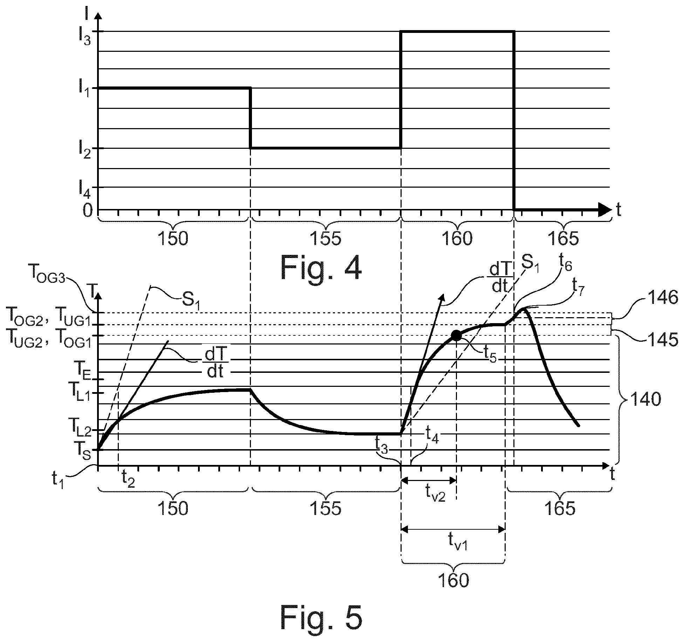

Figur 4 zeigt ein beispielhaftes Stromprofil eines Stroms I in der ersten elektrischen Leitung 60 aufgetragen über der Zeit t. Figur 5 zeigt einen Verlauf T(t) der Leitertemperatur T in Abhängigkeit des in Figur 4 gezeigten Stromverlaufs I(t) aufgetragen über der Zeit t. Dabei wird das in Figur 3 gezeigte Verfahren anhand des in Figur 4 gezeigten Stromprofils und des in Figur 5 gezeigten Verlaufs der Leitertemperatur T beispielhaft erläutert. Im Folgenden im Allgemeinen auf das in Figur 3 beschriebene Verfahren und bezogen auf das in Figur 4 und 5 im Speziellen gezeigte Stromprofil auf das Verfahren eingegangen.

Das Stromprofil in Figur 4 ist beispielhaft und weist vier Zeitintervalle 150, 155, 160, 165 auf, die zeitlich aufeinander folgen. In einem ersten Zeitinterfall 150 ist ein erster Strom I₁ über die Zeit t konstant. Der erste Strom I₁ kann beispielsweise 6 A betragen. In einem zweiten Zeitintervall 155, das zeitlich auf das erste Zeitintervall 150 folgt, ist ein zweiter Strom I₂ über die Zeit t konstant, aber geringer als im ersten Zeitintervall 150. So kann beispielsweise der zweite Strom I₂ 3 A betragen. Im dritten Zeitintervall 160, das zeitlich auf das zweite Zeitintervall 155 folgt, ist ein dritter Strom I₃ über die Zeit konstant und größer als der erste und zweite Strom I₁, I₂. Beispielhaft ist der dritte Strom I₃ dreimal so groß wie der zweite Strom I₂ und beträgt beispielsweise 9 A. Der erste Strom I₁ ist beispielhaft doppelt so groß wie der zweite Strom I₂. Das Stromprofil kann aber auch anders ausgebildet sein. Insbesondere kann ein Strom I über die Zeit t in wenigstens einem des ersten bis dritten Zeitintervalls 150, 155, 160 variieren. Im vierten Zeitintervall 165, das zeitlich auf das dritte Zeitintervall 160 folgt, ist eine Stromübertragung über den elektrischen Leiter 126 deaktiviert und ein vierter Strom I₄ = 0.

Durch eine elektrische Energie wird abhängig von dem Strom I(t) der elektrischen Energie und einem elektrischen Widerstand des elektrischen Leiters 126 eine Wärmeleistung in den elektrischen Leiter 126 eingebracht. Die Wärmeleistung wird durch eine Wärmeableitung des elektrischen Leiters 126 über die Ummantelung 130 aus dem elektrischen Leiter 126 in die Umgebung 135 abgeführt. Dabei erwärmt sich die Ummantelung 130. Der Wärmetransport ist von einer Temperaturdifferenz zwischen dem elektrischen Leiter 126 und der Umgebung 135, einer Geometrie der ersten elektrischen Leitung 60 und einer Oberfläche der Ummantelung 130 und des elektrischen Leiters 126 abhängig. Die Leitertemperatur T des elektrischen Leiters 126 ist nicht identisch zu einer Temperatur der Ummantelung 130. Die Temperatur der Ummantelung 130 hinkt zeitlich der Leitertemperatur T nach und ist üblicherweise geringer als die Leitertemperatur T.

In einem ersten Verfahrensschritt 200 ist beispielsweise ein autonomer oder teilautonomer Fahrbetrieb des Fahrzeugs 10 aktiviert und die zweite Steuereinheit 85 steuert den sicherheitskritischen Verbraucher 30 auf Grundlage des im zweiten Datenspeicher 90 abgelegten Steuerverfahrens an. Der teilautonome oder autonome Fahrbetrieb wird im Beispiel über das erste bis dritte Zeitintervall 150, 155, 160 aufrechterhalten. Dabei ist die Schalteinrichtung 91 in den ersten Schaltzustand geschalten, wobei im ersten Schaltzustand die Schalteinrichtung 91 elektrisch den sicherheitskritischen Verbraucher 30 mit der elektrischen Energiequelle 25 verbindet und der sicherheitskritische Verbraucher 30 mit elektrischer Energie aus der elektrischen Energiequelle 25 versorgt wird.

Der sicherheitskritische Verbraucher 30 wird in dem ersten und zweiten Zeitintervall 150, 155 mit dem ersten und zweiten Strom I₁, I₂ in einem Regelbetrieb betrieben. Der zweite Strom I₂ kann beispielsweise durch eine reduzierte Leistungsaufnahme des sicherheitskritischen Verbrauchers 30 gegenüber dem ersten Strom I₁ reduziert sein. Aufgrund des elektrischen Widerstands des elektrischen Leiters 126 erwärmt sich die erste elektrische Leitung 60 im ersten Zeitintervall 150 von einer Leiterstarttemperatur T_{S} (die einer Umgebungstemperatur der ersten elektrischen Leitung 60 entsprechen kann, vgl. Figur 5) zu Beginn des Regelbetriebs des Verbrauchers 30 auf eine erste Leitertemperatur T_{L1} zum Ende des ersten Zeitintervalls 150. Ein erster Anstieg der Leitertemperatur T über die Zeit t nimmt mit zunehmender Zeit t ab. Da die erste Leitertemperatur T_{L1} am Ende des ersten Zeitintervalls 150 kleiner als die erste untere Grenztemperatur T_{UG1} ist, wird die erste elektrische Leitung 60 durch den zu übertragenden ersten Strom I₁ im ersten Zeitintervall nicht beschädigt. Die Leitertemperatur T bleibt im ersten Zeitintervall 150 im ersten Leitertemperaturfenster 140.

In einem speziellen Beispiel ist der sicherheitskritische Verbraucher 30 als Radarsensor ausgebildet und tastet den Fahrraum 35 vor dem Fahrzeug 10 ab. Der sicherheitskritische Verbraucher 30 stellt die ermittelte Information über den Fahrraum 35 über die elfte Verbindung 122 und über die zweite Schnittstelle 80 der zweiten Steuereinheit 85 bereit. Die zweite Steuereinheit 85 erfasst die Information des sicherheitskritischen Verbrauchers 30 und steuert auf Grundlage der Information das Fahrzeug 10, insbesondere die Antriebseinrichtung 46 und/oder die Lenkeinrichtung 47, beispielsweise im autonomen Fahrbetrieb oder im teilautonomen Fahrbetrieb.

Im zweiten Verfahrensschritt 205 misst der Temperatursensor 139 als Betriebsparameter des elektrischen Leiters 126 die Leitertemperatur T der ersten elektrischen Leitung 60, insbesondere des elektrischen Leiters 126, und stellt als Information über den Betriebsparameter ein Temperatursignal mit einer zur Leitertemperatur T korrelierenden Temperaturinformation über die erste Verbindung 95 der ersten Schnittstelle 65 bereit. Die erste Schnittstelle 65 erfasst die als Information über den Betriebsparameter ausgebildete Temperaturinformation und stellt die Temperaturinformation der ersten Steuereinheit 70 über die dritte Verbindung 105 bereit.

Im in Figur 4 gezeigten Beispiel erfasst zu Beginn des ersten Zeitintervalls 150 der Temperatursensor 139 als Leitertemperatur T(t₁) die Starttemperatur T_{S} des elektrischen Leiters 126, die im Wesentlichen der Umgebungstemperatur der ersten elektrischen Leitung 60 entspricht. Die Starttemperatur T_{S} wird über die erste Verbindung 95 als Temperaturinformation von dem Temperatursensor 139 der ersten Schnittstelle 65 bereitgestellt.

In einem dritten Verfahrensschritt 210 überwacht die erste Steuereinheit 70 den Betriebsparameter des elektrischen Leiters 126, im Beispiel die Leitertemperatur T, über die Zeit **t.** Dazu kann beispielsweise die erste Steuereinheit 70 die zu einem ersten Zeitpunkt t₁ ermittelte Leitertemperatur T(t₁) mit einer Zeitinformation in dem ersten Datenspeicher 75 abspeichern. Der zweite und dritte Verfahrensschritt 205, 210 wird nach einem vordefinierten Wiederholungszeitintervall, beispielsweise nach 0,1 Sekunden, wiederholt. Auch die zu einem zweiten Zeitpunkt t₂ ermittelte Information über den Betriebsparameter, in dem Beispiel der Leitertemperatur T(t₂), wird von der ersten Steuereinheit 70 im ersten Datenspeicher 75 abgespeichert.

Durch den im ersten Zeitintervall 150 übertragenen ersten Strom I₁ erwärmt sich die erste elektrische Leitung 126 über die Zeit t. Bei Wiederholung des zweiten und dritten Verfahrensschritts 205, 210 misst der Temperatursensor 139 bei der Wiederholung des zweiten Verfahrensschritts 205 beispielsweise zum zweiten Zeitpunkt t₂, eine höhere Leitertemperatur T(t₂) als zum ersten Zeitpunkt t₁. Die zu den ersten und zweiten Zeitpunkten t₁, t₂ erfassten Leitertemperaturen T(t₁), T(t₂) werden von der ersten Steuereinheit im ersten Datenspeicher 75 abgespeichert.

Ferner ermittelt die erste Steuereinheit 70 im dritten Verfahrensschritt 210 auf Grundlage der im ersten Datenspeicher 75 abgelegten Informationen über den Betriebsparameter (in der Ausführungsform die Leitertemperaturen T(t₁), T(t₂), beispielsweise zum ersten Zeitpunkt t₁ und dem auf den ersten Zeitpunkt t₁ direkt folgenden zweiten Zeitpunkt t₂) und dem vordefinierten Parametermodell eine Gleichgewichtstemperatur T_{G}. Die Gleichgewichtstemperatur T_{G} entspricht dabei der Leitertemperatur T auf die sich der elektrische Leiter 126 unter Beibehaltung der Umgebungsbedingungen des elektrischen Leiters 126 und des über den elektrischen Leiter 126 übertragenen Stroms I erwärmt. Die Leitertemperatur T nähert sich über die Zeit t im ersten Zeitintervall 150 asymptotisch an die ermittelte Gleichgewichtstemperatur T_{G} an.

In den Figuren 4 und 5 nähert sich die Leitertemperatur T im ersten Zeitintervall 150 an eine ermittelte erste Gleichgewichtstemperatur T_{G1} beispielsweise am Ende des ersten Zeitintervalls 150 an. Am Ende des ersten Zeitintervalls 150 entspricht beispielsweise der ersten Leitertemperatur T_{L1} der ersten Gleichgewichtstemperatur T_{G1}.

In einem vierten Verfahrensschritt 215 vergleicht die erste Steuereinheit 70 die im dritten Verfahrensschritt 210 ermittelten Gleichgewichtstemperatur T_{G} mit dem vordefinierten Schwellenwert S₁. Der vordefinierte Schwellenwert kann der zweiten oberen Grenztemperatur T_{OG2} entsprechen. Wird der vordefinierte Schwellenwert S₁ durch die Gleichgewichtstemperatur T_{G} überschritten, bedeutet dies, dass der Temperaturanstieg des elektrischen Leiters 126 zu stark ist und unter der Annahme, dass der über die erste elektrische Leitung 60 übertragene Strom I(t) weiterhin aufrechterhalten wird, die Leitertemperatur T, insbesondere die am Ende der Erwärmung stehende Gleichgewichtstemperatur T_{G}, die zweite obere Grenztemperatur T_{OG2} überschreiten wird.

Bei Überschreiten des vordefinierten Schwellenwerts S₁ durch die Gleichgewichtstemperatur T_{G} fährt die erste Steuereinheit 70 mit dem fünften Verfahrensschritt 220 fort. Unterschreitet die ermittelte Gleichgewichtstemperatur den vordefinierten Schwellenwert S₁, so wird mit dem zweiten Verfahrensschritt 205 fortgefahren. Der zweite und dritte Verfahrensschritt 205, 210 können auch in regelmäßigen Zeitintervallen auch nach Durchführung des fünften und den folgenden Verfahrensschritten durchgeführt werden, sodass aktuelle Informationen über den Betriebsparameter vorliegen.

In Figur 4 und 5 unterschreitet beispielsweise die erste Gleichgewichtstemperatur T_{G1} den vordefinierten Schwellenwert S₁ im ersten Zeitintervall 150, sodass nach dem zweiten Zeitpunkt t₂ die erste Steuereinheit 70 mit dem zweiten Verfahrensschritt 205 fortfährt.

In den Figuren 4 und 5 steigt über die Zeit t hinweg die Leitertemperatur T der ersten elektrischen Leitung 60 innerhalb des ersten Zeitintervalls 150 von der Startemperatur T_{S} auf die erste Leitertemperatur T_{L1} an. Dabei wird die erste Leitertemperatur T_{L1} am Ende des ersten Zeitintervalls 150 erreicht. Ist das erste Zeitintervall 150 lange genug, so entspricht die erste Leitertemperatur T_{L1} der am Beginn des ersten Zeitintervalls 15 ermittelten ersten Gleichgewichtstemperatur T_{G1}.

Durch die gleichzeitige Abführung von Wärme aus dem elektrischen Leiter 126 an die Umgebung 135, nimmt mit zunehmender Zeit t ein Temperaturgradient dT/dt im ersten Zeitintervall 150 ab. Der Verlauf der Leitertemperatur T ähnelt dabei einer e-Funktion.

Am Ende des ersten Zeitintervalls 150 und zu Beginn des zweiten Zeitintervalls 155 reduziert, wie oben erläutert, das Fahrzeugsteuergerät 20 die Leistung des sicherheitskritischen Verbrauchers 30, sodass der sicherheitskritische Verbraucher 30 den zweiten Strom I₂ verbraucht, der geringer ist als der erste Strom I₁. Der zweite Strom I₂ ist über das zweite Zeitintervall 155 beispielhaft konstant.

Durch den geringeren Stromverbrauch im zweiten Zeitintervall 155 mit dem zweiten Strom I₂ fällt die Leitertemperatur T während des zweiten Zeitintervalls 155 von der ersten Leitertemperatur T_{L1} ab. Durch die Wiederholung des zweiten bis vierten Verfahrensschritts 205 - 215 erfasst die erste Steuereinheit 70 den Abfall der Leitertemperatur T zu Beginn des zweiten Zeitintervalls 155.

Da der zweite bis vierte Verfahrensschritt 205 bis 215 fortwährend wiederholt werden, solange nicht die ermittelte Gleichgewichtstemperatur T_{G} den ersten Schwellenwert S₁ überschreitet, so wird ist mit zunehmender Zeit t die ermittelte Gleichgewichtstemperatur T_{G} präziser, zum anderen ermittelt die erste Steuereinheit 70 auch zu Beginn des zweiten Zeitintervalls 155 eine zweite Gleichgewichtstemperatur T_{G2} unter Annahme, dass der zweite Strom I₂ weiter aufrechterhalten wird. Am Ende des zweiten Zeitintervalls 155 ist die Leitertemperatur T auf die zweite Leitertemperatur T_{L2} abgefallen, die am Ende des zweiten Zeitintervalls 155 der durch die zweite Steuereinheit 70 ermittelten zweiten Gleichgewichtstemperatur T_{G2} entspricht.

Zu Beginn des dritten Zeitintervalls 160 - im Folgenden als Zeitpunkt t₃ bezeichnet - tritt der Fehlerfall mit einem Fehler des sicherheitskritischen Verbrauchers 30 ein. Der Fehler kann beispielsweise ein schleichender Kurzschluss im Verbraucher 30 sein. Der Fehler bewirkt, dass der von dem elektrischen Leiter 126 übertragene Strom I(t) von dem zweiten Strom I₂ auf den dritten Strom I₃ ansteigt. In Figur 4 verdreifacht sich beispielsweise der dritte Strom I(t₃) schlagartig zu Beginn des dritten Zeitintervalls 160 im dritten Zeitpunkt t₃ gegenüber dem zweiten Strom I₂. Durch den dritten Strom I₃ wird eine erhöhte Wärmeleistung in die erste elektrische Leitung 60 eingebracht. Die erhöhte Wärmeleistung bewirkt einen Temperaturanstieg ausgehend von der zweiten Leitertemperatur T_{L2} zu Beginn des dritten Zeitintervalls 160. In einem vierten Zeitpunkt t₄, der zeitlich auf den dritten Zeitpunkt t₃ folgt, ist die Leitertemperatur T(t₄) größer als im dritten Zeitpunkt t₃.

Zu Beginn des dritten Zeitintervalls 160 ermittelt die erste Steuereinheit 70 im dritten Verfahrensschritt 210 für den dritten und vierten Zeitpunkt t₃, t₄ eine dritte Gleichgewichtstemperatur T_{G3}.

Im vierten Verfahrensschritt 215 vergleicht die Steuereinheit 70 die ermittelte dritte Gleichgewichtstemperatur T_{G3} mit dem vordefinierten Schwellenwert S₁ und erfasst, dass die dritte Gleichgewichtstemperatur T_{G3} den ersten vordefinierten Schwellenwelt S₁ überschreitet.

Im fünften Verfahrensschritt 220 stellt die erste Steuereinheit 70 an der ersten Schnittstelle 65 ein erstes Warnsignal mit einer ersten Warninformation bereit. Das erste Warnsignal wird von der ersten Schnittstelle 65 über die vierte Verbindung 110 an die zweite Schnittstelle 80 übertragen. Die zweite Schnittstelle 80 stellt das erste Warnsignal über die dritte Verbindung 105 der zweiten Steuereinheit 85 bereit. Die zweite Steuereinheit 85 erfasst das erste Warnsignal.

Auf Grundlage der ersten Warninformation aktiviert die zweite Steuereinheit 85 die Ausgabeeinrichtung 40 zur Anzeige einer ersten Warnmeldung, dass in Kürze mit dem Ausfall des sicherheitskritischen Verbrauchers 30 zu rechnen ist. Die erste Warnmeldung kann ferner eine Information enthalten, dass durch den Ausfall des sicherheitskritischen Verbrauchers 30 der autonome oder teilautonome Fahrbetrieb des Fahrzeugs 10 beendet werden muss und der Fahrzeugführer 180 die Fahrzeugführung des Fahrzeugs 10 übernehmen muss.

Auch kann die zweite Steuereinheit 85 das Fahrzeug im autonomen Fahrbetrieb oder im teilautonomen Fahrbetrieb auf Grundlage der Warninformation beispielsweise einen nächstliegen Parkplatz ansteuert oder auf eine rechte Spur einer mehrspurigen Straße wechselt.

Ferner kann die zweite Steuereinheit 85 die Ausgabeeinrichtung 40 derart auf Grundlage der ersten Warninformation für eine Nutzerabfrage ansteuern. Der Fahrzeugführer 180 kann die Nutzerabfrage dahingehend mittels der Eingabeeinrichtung 45 beantworten, dass er den autonomen oder teilautonomen Fahrbetrieb beendet und die Fahrzeugführung des Fahrzeugs 10 übernimmt oder die Fahrzeugführung nicht übernimmt oder dass der Fahrzeugführer 180 die Nutzerabfrage nicht beantwortet.

Die Eingabeeinrichtung 45 erfasst die Eingabe einer Nutzerantwort und stellt in Abhängigkeit der Eingabe ein Eingabesignal mit einer Eingabeinformation bereit. Das Eingabesignal wird über die zwölfte Verbindung 123 an die zweite Schnittstelle 80 übertragen. Die zweite Schnittstelle 80 leitet das Eingabesignal an die zweite Steuereinheit 85 weiter.

Die zweite Steuereinheit 85 steuert auf Grundlage des Eingabesignals die Schalteinrichtung 91. Insbesondere steuert die zweite Steuereinheit 85 die Schalteinrichtung 91 bei Erfassen einer Eingabe über die Bereitschaft des Fahrzeugführers 180, die Fahrzeugführung zu übernehmen, derart an, dass die Schalteinrichtung 91 vom ersten Schaltzustand in den zweiten Schaltzustand wechselt und den sicherheitskritischen Verbraucher 30 dadurch stromlos schaltet.

Die im Folgenden beschrieben Verfahrensschritte 220 bis 280 werden solange durchgeführt, bis der Fahrzeugführer 180 die Nutzerabfrage dahingehend beantwortet, dass der Fahrzeugführer 180 die Fahrzeugführung übernimmt. Die Nutzerabfrage der Ausgabeeinrichtung 40 bleibt dabei so lange aktiv, bis der Fahrzeugführer 180 diese beantwortet hat.

In einem auf den fünften Verfahrensschritt 220 folgenden sechsten Verfahrensschritt 225 ermittelt die erste Steuereinheit 70 auf Grundlage der ermittelten aktuellen Leitertemperatur T, des Verlaufs der Leitertemperatur T(t) über die Zeit t, der zweiten oberen Grenztemperatur T_{OG2} und eines vordefinierten Parameters, beispielsweise eines Vorhersagemodells, ein erstes Vorhersagezeitintervall t_{V1} nach Überschreiten des vordefinierten Schwellenwerts S₁ durch die (dritte) Gleichgewichtstemperatur T_{G3} bis zur voraussichtlichen Überschreitung der zweiten obere Grenztemperatur T_{OG2}. Der vordefinierte Parameter kann beispielsweise ein mathematisches Modell, ein Algorithmus, ein Kennfeld oder eine tabellarische Zuordnung sein. Der vordefinierte Parameter kann dabei auch Teil des vordefinierten Parametermodells zur Ermittlung der Gleichgewichtstemperatur T_{G} sein. Insbesondere kann das Parametermodell eine mathematische Formel sein, wobei der vordefinierte Parameter eine umgeformte Form der mathematischen Formel des Parametermodells ist.

Im sechsten Verfahrensschritt 225 ermittelt die erste Steuereinheit 70 beispielsweise für das in Figur 4 gezeigte Stromprofil auf Grundlage der ermittelten Leitertemperaturen T(t₃), T(t₄) zu Beginn des dritten Zeitintervalls 160 und des als mathematisches Modell ausgebildeten vordefinierten Parameters das erste Vorhersagezeitintervall t_{V1} bis zur voraussichtlichen Überschreitung der zweiten oberen Grenztemperatur T_{OG2}.

Die erste Steuereinheit 70 stellt an der ersten Schnittstelle 65 ein erstes Informationssignal mit einer ersten Zeitintervallinformation korrelierend zu dem ersten Vorhersagezeitintervall t_{V1} an der ersten Schnittstelle 65 bereit.

Die erste Zeitintervallinformation wird über die vierte Verbindung 110 an die zweite Schnittstelle 80 des Fahrzeugsteuergeräts 20 übertragen. Die zweite Steuereinheit 85 erfasst die erste Zeitintervallinformation. Die erste Zeitintervallinformation kann die zweite Steuereinheit 85 bei der Nutzerabfrage mitberücksichtigen und beispielsweise an der Ausgabeeinrichtung 40 ausgeben, bis wann mit dem Ausfall des sicherheitskritischen Verbrauchers 30 zu rechnen ist, und/oder ausgeben, bis wann nur noch der autonome oder teilautonome Fahrbetrieb bereitsteht und/oder bis wann der Fahrzeugführer 180 die Fahrzeugführung des Fahrzeugs 10 zu übernehmen hat.

Zusätzlich kann mit zunehmender Zeit t bis zu einem Ende des ersten Vorhersagezeitintervalls T_{V1} die Darstellung der Ausgabeeinrichtung 40 grafisch zunehmend verdeutlicht werden, sodass dem Fahrzeugführer 180 die Dringlichkeit der Übernahme der manuellen Fahrzeugführung verdeutlicht wird. Zusätzlich können mit Annäherung an das Ende des ersten Vorhersagezeitintervalls T_{V1} akustische Warnsignale ausgegeben werden.

In einem siebten Verfahrensschritt 230, der auf den sechsten Verfahrensschritt 225 folgt, kann zusätzlich die erste Steuereinheit 70 auf Grundlage der ermittelten Leitertemperatur T (beispielsweise im Zeitschritt vor Überschreiten des vordefinierten Schwellenwerts S₁), des Verlaufs der Leitertemperatur T(t) über die Zeit t, der ersten oberen Grenztemperatur T_{OG1} und auf Grundlage des vordefinierten Parameters ein zweites Vorhersagezeitintervall t_{V2} nach Überschreiten des vordefinierten Schwellenwerts S₁ bis zur voraussichtlichen Überschreitung der ersten oberen Grenztemperatur T_{OG1} ermitteln.

Die erste Steuereinheit 70 kann über die Schnittstellen 65, 80 der zweiten Steuereinheit 85 eine mit dem zweiten Vorhersagezeitintervall t_{V2} korrelierende zweite Zeitintervallinformation bereitstellen, wobei die zweite Steuereinheit 85 bei der Nutzabfrage auch das zweite Vorhersagezeitintervall t_{V2} berücksichtigen kann.

Dies kann beispielsweise dahingehend erfolgen, dass das zweite Vorhersageintervall t_{V2} statt dem ersten Vorsageintervall t_{V1}, bis der Fahrzeugführer 180 auf die Nutzerabfrage zu reagieren hat bzw. bis die Übergabe vom autonomen/teilautonomen Fahrbetrieb auf manuellen Fahrbetrieb zu erfolgen hat, angezeigt wird.

In einem achten Verfahrensschritt 235, der auf den siebten Verfahrensschritt 230 folgt, vergleicht die erste Steuereinheit 70 die ermittelte aktuelle Leitertemperatur T mit der zweiten unteren Grenztemperatur T_{UG2}. Unterschreitet die aktuelle Leitertemperatur T die zweite untere Grenztemperatur T_{UG2}, so fährt die erste Steuereinheit 70 mit dem neunten Verfahrensschritt 240 fort. Überschreitet die aktuelle Leitertemperatur T den unteren zweiten Grenztemperatur T_{UG2} (in Figur 5 in einem fünften Zeitpunkt t₅), so fährt die erste Steuereinheit 70 mit einem zehnten Verfahrensschritt 245 fort.

Im neunten Verfahrensschritt 240 wartet die erste Steuereinheit 70 die nächste Ermittlung der aktuellen Leitertemperatur T(t) ab und wiederholt dann den zweiten bis achten Verfahrensschritt 205-235. Dadurch, dass die Leitertemperatur T kleiner als die zweite untere Grenztemperatur T_{UG2} ist, wird die erste elektrische Leitung 60 im ersten Leitertemperfenster 140 betrieben.

Im zehnten Verfahrensschritt 245 stellt die erste Steuereinheit 70 über die Schnittstellen 65, 80 der zweiten Steuereinheit 85 ein zweites Warnsignal mit einer zweiten Warninformation über das Überschreiten der zweiten unteren Grenztemperatur T_{UG2} durch die Leitertemperatur T bereit. Die erste elektrische Leitung 60 wird mit Überschreiten der zweiten unteren Grenztemperatur T_{UG2} im zweiten Leitertemperaturfenster 145 nun betrieben, in dem eine zweite maximale Betriebsdauer t_{B2} der ersten elektrischen Leitung 60 gegenüber der ersten maximalen Betriebsdauer t_{B1} stark reduziert ist. Ferner steuert die zweite Steuereinheit 85 die Schalteinrichtung 91 derart an, dass die Schalteinrichtung 91 im ersten Schaltzustand verbleibt.

In einem elften Verfahrensschritt 250, der auf den zehnten Verfahrensschritt 245 folgt, stellt die zweite Steuereinheit 85 aufgrund der zweiten Warninformation an der Ausgabeeinrichtung 40 eine zusätzliche zweite Warnung mit der Information dar, dass der Fahrzeugführer 180 nun die Nutzerabfrage in einem sehr kurzen Zeitraum über die Eingabeeinrichtung 45 beantworten soll und die Fahrzeugführung zu übernehmen hat, da mit dem baldigen Ausfall des sicherheitskritischen Verbrauchers 30 zu rechnen ist. Zusätzlich kann auch die akustische Warnung verdeutlicht werden, beispielsweise indem eine Lautstärke eines Warntons erhöht wird.

In einem zwölften Verfahrensschritt 255, der auf den elften Verfahrensschritt 250 folgt, überprüft die erste Steuereinheit 70 durch Vergleich der aktuellen Leitertemperatur T mit der zweiten oberen Grenztemperatur T_{OG2}, ob sich die aktuelle Leitertemperatur T im zweiten Leitertemperaturfenster 145 (noch) befindet. Ferner ermittelt die erste Steuereinheit 70 eine erste Nutzungsdauer seit Überschreiten der zweiten unteren Grenztemperatur T_{UG2} und summiert die erste Nutzungsdauer mit einer im ersten Datenspeicher 75 bereits abgespeicherten ersten Gesamtnutzungsdauer zu einer aktualisierten ersten Gesamtnutzungsdauer auf, mit der die erste elektrische Leitung 60 im zweiten Leitertemperaturfenster 145 betrieben worden ist. Mit der aktualisierten ersten Gesamtnutzungsdauer wird die abgespeicherte erste Gesamtnutzungsdauer überschrieben.

In einem dreizehnten Verfahrensschritt 260 stellt die erste Steuereinheit 70 über die Schnittstellen 65, 80 eine erste Nutzungszeitinformation über die aktualisierte erste Gesamtnutzungsdauer der ersten elektrischen Leitung 60 im zweiten Leitertemperaturfenster 145 der zweiten Steuereinheit 85 bereit. Die zweite Steuereinheit 85 kann die erste Nutzungszeitinformation in dem zweiten Datenspeicher 90 abspeichern und bei einer Fehleranalyse und/oder bei einer Wartung des Fahrzeugs 10 aufrufen, um auf Grundlage der ersten Nutzungszeitinformation einen Rückschluss auf einen Verschleiß der ersten elektrischen Leitung 60 zu ziehen. Gegebenenfalls kann in diesem Fall frühzeitig vor einem Ausfall der ersten elektrischen Leitung 60 im Rahmen der Wartung gewarnt werden, sodass frühzeitig die erste elektrische Leitung 60 getauscht werden kann und beispielsweise ein Kabelbrand oder ein Ausfall der ersten elektrischen Leitung 60 während des Fahrbetriebs des Fahrzeugs 10 vermieden wird.

In einem vierzehnten Verfahrensschritt 265 vergleicht die erste Steuereinheit 70 die aktuell ermittelte Leitertemperatur T mit der zweiten oberen Grenztemperatur T_{OG2}. Unterschreitet die aktuelle Leitertemperatur T(t) die obere zweiten Grenztemperatur T_{OG2}, so wird mit dem elften Verfahrensschritt 250 fortgefahren. Überschreitet die aktuelle Leitertemperatur T(t) die zweite obere Grenztemperatur T_{OG2} (in Figur 5 im sechsten Zeitpunkt t₆), so wird mit einem fünfzehnten Verfahrensschritt 270 fortgefahren.

In dem fünfzehnten Verfahrensschritt 270, der auf den vierzehnten Verfahrensschritt 265 folgt, überprüft die erste Steuereinheit 70 durch Vergleich der aktuellen Leitertemperatur T mit der dritten oberen Grenztemperatur T_{OG3}, ob sich die aktuelle Leitertemperatur T im dritten Leitertemperaturfenster 146 befindet. Ferner ermittelt die erste Steuereinheit 70 eine zweite Nutzungsdauer seit Überschreiten der dritten unteren Grenztemperatur T_{UG3} und summiert die zweite Nutzungsdauer mit einer im ersten Datenspeicher 75 bereits abgespeicherten zweiten Gesamtnutzungsdauer zu einer aktualisierten zweiten Gesamtnutzungsdauer auf, mit der die erste elektrische Leitung 60 im dritten Leitertemperaturfenster 146 betrieben worden ist. Mit der aktualisierten zweiten Gesamtnutzungsdauer wird die abgespeicherte zweite Gesamtnutzungsdauer überschrieben.

Ermittelt die erste Steuereinheit 70 im fünfzehnten Verfahrensschritt 270, dass die aktuelle Leitertemperatur T oberhalb der dritten oberen Grenztemperatur T_{OG3} liegt (in Figur 5 im sechsten Zeitpunkt t₆), so stellt die erste Steuereinheit 70 ein Abschaltsignal mit einer Abschaltinformation über die Schnittstellen 65, 80 der zweiten Steuereinheit 85 bereit, wobei die zweite Steuereinheit 85 auf Grundlage der Abschaltinformation die Schalteinrichtung 91 vom ersten Schaltzustand in den zweiten Schaltzustand schaltet, wobei im zweiten Schaltzustand die Schalteinrichtung 91 den sicherheitskritischen Verbraucher 30 von der elektrischen Energiequelle 25 elektrisch trennt und dadurch deaktiviert. Gegebenenfalls wird zusätzlich der Fahrzeugführer 180 über die Ausgabeeinrichtung 40 über das Deaktivieren des sicherheitskritischen Verbrauchers 30 informiert. Ferner schaltet die zweite Steuereinheit 85 von dem autonomen oder teilautonomen Fahrbetrieb in den manuellen Fahrbetrieb, in dem der Fahrzeugführer 180 das Fahrzeug 10 selbst steuert. Alternativ wäre auch denkbar, dass die zweite Steuereinheit 85 eine Notbremsung des Fahrzeugs 10 einleitet, sofern die zweite Steuereinheit 85 erfasst, dass der Fahrzeugführer 180 nicht die manuelle Fahrzeugführung übernommen hat.

Durch das Stromlosschalten der ersten elektrischen Leitung 60 zu Beginn des vierten Zeitintervalls 165 kühlt nach Ende des dritten Zeitintervalls 160 die erste elektrische Leitung 60 im vierten Zeitintervall 165 ab. Da jedoch eine Temperatur der Ummantelung 130 der aktuellen Leitertemperatur T des elektrischen Leiters 126 zeitlich der Abkühlung des elektrischen Leiters 126 nachhinkt, kann die aktuelle Leitertemperatur T der Ummantelung 130 kurzfristig zu Beginn des vierten Zeitintervalls 165 noch ansteigen und erreicht am Temperatursensor 139 ihr Temperaturmaximum im siebten Zeitpunkt t₇. Durch die Anordnung des Temperatursensors 139 unmittelbar am elektrischen Leiter 126 fallen der sechste Zeitpunkt t₆ und der siebte Zeitpunkt t₇ zusammen.

In einem sechzehnten Verfahrensschritt 275, der zeitgleich zum fünfzehnten Verfahrensschritt 270 oder zeitlich nach dem viertzehnten oder fünfzehnten Verfahrensschritt 265, 270 durchgeführt werden kann, stellt die erste Steuereinheit 70 über die Schnittstellen 65, 80 eine zweite Nutzungszeitinformation über die aktualisierte zweite Gesamtnutzungsdauer der ersten elektrischen Leitung 60 im dritten Leitertemperaturfenster 146 bereit. Die zweite Steuereinheit 85 kann die erste Nutzungszeitinformation in dem zweiten Datenspeicher 90 abspeichern und bei einer Fehleranalyse und/oder bei einer Wartung des Fahrzeugs 10 aufrufen, um auf Grundlade der zweiten Nutzungszeitinformation einen Rückschluss auf einen Verschleiß der ersten elektrischen Leitung 60 zu ziehen. Gegebenenfalls kann in diesem Fall frühzeitig vor einem Ausfall der ersten elektrischen Leitung 60 im Rahmen der Wartung gewarnt werden. Beispielsweise kann frühzeitig die erste elektrische Leitung 60 getauscht werden und beispielsweise ein Kabelbrand oder ein Ausfall der ersten elektrischen Leitung 60 während des Fahrbetriebs des Fahrzeugs 10 vermieden werden.

In einem siebzehnten Verfahrensschritt 280, der zeitgleich zum sechzehnten Verfahrensschritt 275 oder zeitlich nach dem fünftzehnten oder sechzehnten Verfahrensschritt 270, 275 durchgeführt werden kann, vergleicht die erste Steuereinheit 70 die aktuelle Leitertemperatur T mit der vordefinierten Erholungstemperatur T_{E}, die vorzugsweise im ersten Leitertemperaturfenster 140 liegt und somit kleiner als die erste untere Grenztemperatur T_{UG1} ist. Die Erholungstemperatur T_{E} ist vorzugweise größer als die erste untere Grenztemperatur T_{UG1} und ist näher an der ersten oberen Grenztemperatur T_{OG1} als an der ersten unteren Grenztemperatur T_{UG1}. Die Erholungstemperatur T_{E} kann beispielsweise 85° C betragen.

Unterschreitet die ermittelte aktuelle Leitertemperatur T die Erholungstemperatur T_{E}, so stellt die erste Steuereinheit 70 ein Entwarnsignal mit einer Entwarnungsinformation über die Schnittstellen 65, 80 der zweiten Steuereinheit 85 bereit, wobei die zweite Steuereinheit 85 aufgrund der Entwarnungsinformation den Verbraucher 30 wieder aktivieren kann und/oder dem Fahrzeugführer 180 des Fahrzeugs 10 eine Information über die Ausgabeeinrichtung 40 bereitstellt, dass der autonome oder teilautonome Fahrbetrieb wieder zur Verfügung steht. Überschreitet die aktuelle Leitertemperatur T(t) die Erholungstemperatur T_{E}, so fährt die erste Steuereinheit 70 mit dem elften Verfahrensschritt 250 fort.

Zusätzlich kann die erste Steuereinheit 70 im siebzehnten Verfahrensschritt 280 die ermittelte erste aktualisierte Gesamtnutzungsdauer mit der zweiten maximalen Betriebsdauerdauer t_{B2} der ersten elektrischen Leitung 60 im zweiten Leitertemperaturfenster 145 und/oder die ermittelte zweite aktualisierte Gesamtnutzungsdauer mit der dritten maximalen Betriebsdauerdauer t_{B3} der ersten elektrischen Leitung 60 im dritten Leitertemperaturfenster 146 vergleichen. Bei Überschreiten der zweiten maximalen Betriebsdauerdauer t_{B2} durch die aktualisierte erste Gesamtnutzungsdauer und/oder der dritten maximalen Betriebsdauer t_{B3} durch die aktualisierte zweite Gesamtnutzungsdauer kann die erste Steuereinheit 70 nach Unterschreiten der Erholungstemperatur T_{E} durch die aktuelle Leitertemperatur T die Schalteinrichtung 91 derart steuern oder das Fahrzeugsteuergerät 20 die Schalteinrichtung 91 derart steuern, dass die Schalteinrichtung 91 im zweiten Schaltzustand verbleibt bis die erste elektrische Leitung 60 getauscht ist. Dadurch kann ein Kabelbrand der ersten elektrischen Leitung 60 vermieden werden.

In einer in Figur 1 gezeigten Weiterbildung ist die Schalteinrichtung 91 mittels der in Figur 1 strichliert dargestellten zehnten Verbindung 121 mit der ersten Schnittstelle 65 verbunden. In diesem Fall wird auf die neunte Verbindung 119 verzichtet. In diesem Fall wird die Schalteinrichtung 91 durch die erste Steuereinheit 70 statt der zweiten Steuereinheit 85 angesteuert. Dazu kann die zweite Steuereinheit 85 die erste Steuereinheit 70 entsprechend ansteuern.

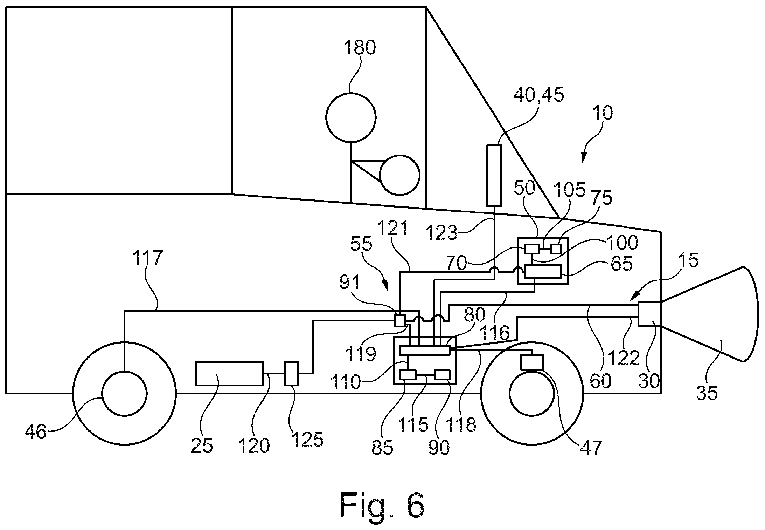

Fig. 6 zeigt eine schematische Darstellung eines Fahrzeugs 10 gemäß einer zweiten Ausführungsform.

Das Fahrzeug 10 ist im Wesentlichen eine Kombination aus dem in Figur 1 gezeigten Fahrzeug 10 und der in Figur 1 gezeigten Weiterbildung des Fahrzeugs 10, sodass das Fahrzeug 10 sowohl die neunte Verbindung 119 als auch die zehnte Verbindung 121 aufweist. Auf den Temperatursensor 139 und die erste Verbindung 95 wird verzichtet. Dabei ist die Schalteinrichtung 91 Teil der Ermittlungseinheit 55 und weist in dieser Ausführungsform ein (intelligentes) Halbleiterbauelement auf. Insbesondere kann das (intelligente) Halbleiterbauelement ein Smart-High-Side-Power-Switch sein. Die Sicherungseinrichtung 15 und das Fahrzeug 10 werden nach dem in Figur 3 beschrieben Verfahren gesteuert. Statt der Messung im zweiten Verfahrensschritt 210 der Leitertemperatur T stellt die Schalteinrichtung 91 eine Information über einen Betriebsparameter, vorzugsweise über den über die Schalteinrichtung 91 übertragenen Strom I(t), der ersten Steuereinheit 70 über die zehnte Verbindung 121 bereit. Die erste Steuereinheit 70 erfasst die Information über den Betriebsparameter, beispielsweise den übertragenen elektrischen Strom I(t), und ermittelt auf Grundlage der Information über den Betriebsparameter, insbesondere den übertragenen elektrischen Strom I(t) und des Parametermodells, die Gleichgewichtstemperatur T_{G} des elektrischen Leiters 126. Der ermittelte Betriebsparameter kann im Datenspeicher 75 gespeichert werden. Des Weiteren ermittelt die erste Steuereinheit 70 auf Grundlage eines vordefinierten weiteren Parameters, der im ersten Datenspeicher 75 abgespeichert ist, einer durch den Umgebungstemperatursensor ermittelte Umgebungstemperatur die aktuelle Leitertemperatur **T.**

Der weitere Parameter kann beispielsweise ein mathematisches Modell, ein Algorithmus, ein Kennfeld oder eine tabellarische Zuordnung sein. Diese Ausgestaltung hat den Vorteil, dass auf den Temperatursensor 139 und die erste Verbindung 95 verzichtet werden kann. Dadurch sind die Sicherungseinrichtung 15 und das Fahrzeug 10 besonders einfach und kostengünstig ausgebildet. Die weiteren Verfahrensschritte werden wie in Figur 3 erläutert ausgeführt.

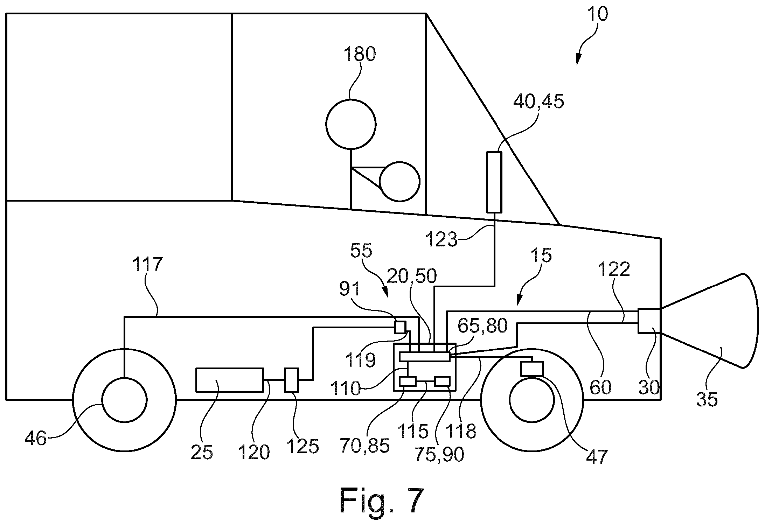

Figur 7 zeigt eine schematische Darstellung eines Fahrzeugs 10 gemäß einer dritten Ausführungsform.

Das Fahrzeug 10 ist im Wesentlichen identisch zu dem in Fig. 6 gezeigten Fahrzeug 10 ausgebildet. Abweichend dazu ist das Steuergerät 50 in das Fahrzeugsteuergerät 20 integriert. Dabei sind die Datenspeicher 75, 90, die Schnittstellen 65, 80 und die Steuereinheiten 70, 85 zusammengefasst. Dadurch kann auf die in Figur 1 gezeigte zweite Verbindung 100, dritte Verbindung 105 und sechste Verbindung 116 verzichtet werden.

Das in Figur 7 gezeigte Fahrzeug 10 kann ebenso mit dem in Figur 3 beschrieben Verfahren betrieben werden, wobei auf die Verfahrensschritte zur Übertragung der Informationen zwischen den in Figur 1 beschriebenen Steuereinheiten 70, 85 verzichtet werden kann.

Durch das oben beschriebene Verfahren und die oben beschriebene Sicherungseinrichtung 15 sowie das Fahrzeug 10 kann sichergestellt werden, dass die erste elektrische Leitung 60 mit Übertemperatur (oberhalb der zweiten unteren Grenztemperatur T_{UG2}) ohne Beschädigung der Ummantelung 130 betrieben werden kann. Ferner ergibt sich auch die Möglichkeit, eine verzögerte Reaktion auf den Fehlerfall des sicherheitskritischen Verbrauchers 30, also wenn der Strom I zum Verbraucher 30 auf beispielsweise den dritten Strom I₃ ansteigt, bereitzustellen und dadurch statt die erste elektrische Leitung 60 zu beschädigen oder einen Unfall zu riskieren, lediglich die erste elektrische Leitung 60 kurzfristig überlastet wird.

Durch das Abspeichern der ersten und zweiten Gesamtnutzungsdauer, mit der die erste elektrische Leitung 60 im zweiten und dritten Leitertemperaturfenster 145, 146 betrieben wird, kann eine Diagnoseinformation für die Wartung oder eine verbesserte Fahrzeugauslegung auf Grundlage der Gesamtnutzungsdauer oberhalb der zweiten unteren Grenztemperatur T_{UG2} bereitgestellt werden.

Auch ist denkbar, dass, wenn die erste und/oder zweite Gesamtnutzungsdauer die maximale zweite und/oder dritte Betriebsdauerdauer t_{B2}, t_{B3} überschreitet, eine Nutzung der ersten elektrischen Leitung 60 durch ein dauerhaftes Schalten der Schalteinrichtung 91 in den zweiten Schaltzustand (bis zum Austausch der ersten elektrischen Leitung 60) unterbunden werden kann. Dadurch kann ein Kabelbrand der ersten elektrischen Leitung 60 vermieden werden.

Ferner wird durch das oben beschriebene Verfahren die Möglichkeit zur Vorwarnung im Fehlerfall des sicherheitskritischen Verbrauchers 30 geschaffen. Des Weiteren wird die Möglichkeit einer verzögerten Fehlerreaktion auf den beschädigten sicherheitskritischen Verbraucher 30 und eine Gewinnung von Reaktionszeit im Fehlerfall des sicherheitskritischen Verbrauchers 30 bei gleichzeitiger Abschätzung eines Schadenspotentials, beispielsweise einer Zeit/Häufigkeit im zweiten und/oder dritten Leitertemperaturfenster 145, 146 zur **Ab**schätzung der maximalen Belastung der ersten elektrischen Leitung 60, gegeben. Ferner ist das Fahrzeug 10 robuster als bisher bekannte Fahrzeuge. Insbesondere können die Anforderungen in einer ASIL-Analyse für Versorgungssysteme des Fahrzeugs 10 auf einfache Weise durch das oben beschriebene Fahrzeug 10 und Verfahren erfüllt werden. Des Weiteren kann auf eine redundante Auslegung des sicherheitskritischen Verbrauchers 30 verzichtet werden, sodass im Fehlerfall des sicherheitskritischen Verbrauchers 30 durch die Übernahme der Aufgaben des sicherheitskritischen Verbrauchers 30 durch den Fahrzeugführer 180 das Fahrzeug 10 besonders einfach ausgebildet werden kann.

Insbesondere die in Figur 7 beschriebene Sicherungseinrichtung 15 ist ferner besonders einfach und kostengünstig nachrüstbar. Des Weiteren kann durch die in den Figuren beschriebene Sicherungseinrichtung 15 die erste elektrische Leitung 60 einen besonders geringen Querschnitt aufweisen, sodass ein Gesamtgewicht der Sicherungseinrichtung 15 besonders gering ist.

Auch ist denkbar, dass die in den Figuren 6 und 7 beschriebene Sicherungseinrichtung 15 mit der in Figur 1 gezeigten Sicherungseinrichtung 15 kombiniert ist, wobei vorteilhafterweise der Temperatursensor 139 an der ersten elektrischen Leitung 60 in dem Bereich angeordnet ist, in dem die erste elektrische Leitung 60 thermisch am stärksten belastet ist.

### Bezugszeichenliste

- 10: Fahrzeug
- 15: Sicherungseinrichtung
- 20: Fahrzeugsteuergerät
- 25: Energiequelle
- 30: Verbraucher
- 35: Fahrraum
- 40: Ausgabeeinrichtung
- 45: Eingabeeinrichtung
- 46: Antriebseinrichtung
- 47: Lenkeinrichtung
- 50: Steuergerät
- 55: Temperaturermittlungseinheit
- 60: erste elektrische Leitung
- 65: erste Schnittstelle
- 70: erste Steuereinheit
- 75: erster Datenspeicher
- 80: zweite Schnittstelle
- 85: zweite Steuereinheit
- 90: zweiter Datenspeicher
- 91: Schalteinrichtung
- 95: erste Verbindung
- 100: zweite Verbindung
- 105: dritte Verbindung
- 110: vierte Verbindung
- 115: fünfte Verbindung
- 116: sechste Verbindung
- 117: siebte Verbindung
- 118: achte Verbindung
- 119: neunte Verbindung
- 120: zweite elektrische Leitung
- 121: zehnte Verbindung
- 122: elfte Verbindung
- 123: zwölfte Verbindung
- 125: weitere Sicherungseinrichtung
- 126: elektrischer Leiter
- 130: Ummantelung
- 135: Umgebung
- 139: Temperatursensor
- 140: erstes Leitertemperaturfenster
- 145: zweites Leitertemperaturfenster
- 146: drittes Leitertemperaturfenster
- 150: erstes Zeitintervall
- 155: zweites Zeitintervall
- 160: drittes Zeitintervall
- 165: viertes Zeitintervall
- 180: Fahrzeugführer

- 200: erster Verfahrensschritt
- 205: zweiter Verfahrensschritt
- 210: dritter Verfahrensschritt
- 215: vierter Verfahrensschritt
- 220: fünfter Verfahrensschritt
- 225: sechster Verfahrensschritt
- 230: siebter Verfahrensschritt
- 235: achter Verfahrensschritt
- 240: neunter Verfahrensschritt
- 245: zehnter Verfahrensschritt
- 250: elfter Verfahrensschritt
- 255: zwölfter Verfahrensschritt
- 260: dreizehnter Verfahrensschritt
- 265: vierzehnter Verfahrensschritt
- 270: fünfzehnter Verfahrensschritt
- 275: sechzehnter Verfahrensschritt
- 280: siebzehnter Verfahrensschritt
- 285: achtzehnter Verfahrensschritt

- T_{S}: Leiterstarttemperatur
- T_{E}: Erholungstemperatur
- T_{UG1}: erste untere Grenztemperatur
- T_{OG1}: erste obere Grenztemperatur
- T_{UG2}: zweite untere Grenztemperatur
- T_{OG2}: zweite obere Grenztemperatur
- T_{UG3}: dritte untere Grenztemperatur
- T_{OG3}: dritte obere Grenztemperatur
- T: Leitertemperatur
- T_{L1}: erste Leitertemperatur
- T_{L2}: zweite Leitertemperatur
- T(t1): Leitertemperatur zum ersten Zeitpunkt
- T(t2): Leitertemperatur zum zweiten Zeitpunkt
- T(t3): Leitertemperatur zum dritten Zeitpunkt
- T(t4): Leitertemperatur zum vierten Zeitpunkt
- T(t): Verlauf der Leitertemperatur über die Zeit

- t_{V1}: erstes Vorhersagezeitintervall
- t_{V2}: zweites Vorhersagezeitintervall
- t_{B1}: erste maximale Betriebsdauer
- t_{B2}: zweite maximale Betriebsdauer
- t_{B3}: dritte maximale Betriebsdauer

- t₁: erster Zeitpunkt
- t₂: zweiter Zeitpunkt
- t₃: dritter Zeitpunkt
- t₄: vierter Zeitpunkt
- t₅: fünfter Zeitpunkt
- t₆: sechster Zeitpunkt
- t₇: siebter Zeitpunkt
- t: Zeit
- T_{S}: Starttemperatur
- S₁: vordefinierter Schwellenwert
- I: Strom
- I(t): Stromverlauf
- I₁: erster Strom
- I₃: dritter Strom
- I₁: erster Strom
- I₂: zweiter Strom
- I₃: dritter Strom
- dT/dt: Temperaturgradient

## Patentansprüche

1. Sicherungseinrichtung (15) für ein autonomes oder ein teilautonomes Kraftfahrzeug (10),
- aufweisend ein Steuergerät (50), eine Ermittlungseinheit (55) und eine elektrische Leitung (60) mit einem elektrischen Leiter (126),
- wobei das Steuergerät (50) eine Steuereinheit (70) und eine mit der Steuereinheit (70) verbundene Schnittstelle (65) aufweist,
- wobei die elektrische Leitung (60) ausgebildet ist, eine elektrische Energie zu einem sicherheitskritischen Verbraucher (30) zu übertragen,
- wobei die Ermittlungseinheit (55) mit der Steuereinheit (70) verbunden und ausgebildet ist, eine Information über einen Betriebsparameter des elektrischen Leiters (126) zu ermitteln und die Information der Steuereinheit (70) bereitzustellen,
- wobei die Steuereinheit (70) ausgebildet ist, die ermittelte Information zu erfassen,
- wobei die Steuereinheit (70) ausgebildet ist, auf Grundlage der Information des Betriebsparameters und eines vordefinierten Parametermodells eine Gleichgewichtstemperatur (T_{G}) des elektrischen Leiters (126) zu errechnen,
- wobei die Gleichgewichtstemperatur (T_{G}) einer Leitertemperatur (T) entspricht, auf die sich der elektrische Leiter (126) unter Beibehaltung der Umgebungsbedingungen des elektrischen Leiters (126) und eines über den elektrischen Leiter (126) übertragenen Stroms (I) erwärmt,
- wobei die Steuereinheit (70) ausgebildet ist, die ermittelte Gleichgewichtstemperatur (T_{G}) mit einem vordefinierten Schwellenwert (S₁) zu vergleichen,
- wobei die Steuereinheit (70) ausgebildet ist, bei Überschreiten des vordefinierten Schwellenwerts (S₁) durch die ermittelte Gleichgewichtstemperatur (T_{G}) ein Warnsignal mit einer Warninformation an der Schnittstelle (65) bereitzustellen,
**dadurch gekennzeichnet, dass**
- das Steuergerät (50) wenigstens einen Datenspeicher (75) aufweist,
- wobei in dem Datenspeicher (75) wenigstens ein erstes Leitertemperaturfenster (140) und ein zweites Leitertemperaturfenster (145) abgelegt ist,
- wobei das erste Leitertemperaturfenster (140) mit einem Dauerbetrieb der elektrischen Leitung (60) korreliert,
- wobei das zweite Leitertemperaturfenster (145) oberhalb des ersten Leitertemperaturfensters (140) liegt,
- wobei die Steuereinheit (70) ausgebildet ist, auf Grundlage der Information über den Betriebsparameter, eines vordefinierten Parameters und einer oberen Grenztemperatur (T_{OG2}) des zweiten Leitertemperaturfensters (145) für den elektrischen Leiter (126) ein erstes Vorhersagezeitintervall (t_{V1}) zu ermitteln, in dem eine Leitertemperatur (T) des elektrischen Leiters (126) die obere Grenztemperatur (T_{OG2}) des zweiten Leitertemperaturfensters (145) voraussichtlich erreicht,
- wobei die Steuereinheit (70) ausgebildet ist, eine erste Zeitintervallinformation über das erste Vorhersagezeitintervall (t_{V1}) an der Schnittstelle (65) bereitzustellen.

2. Sicherungseinrichtung (15) nach Anspruch 1,
- wobei die Schnittstelle (65) ausgebildet ist, eine Information über eine Umgebungstemperatur des Fahrzeugs (10) zu erfassen,
- wobei die Steuereinheit (70) ausgebildet ist, auf Grundlage der ermittelten Information, der Umgebungstemperatur und eines weiteren vordefinierten Parameters eine Leitertemperatur (T) zu ermitteln.

3. Sicherungseinrichtung (15) nach Anspruch 1 oder 2,
- wobei die Ermittlungseinheit (55) einen Temperatursensor (139) umfasst,
- wobei der Temperatursensor (139) an oder zumindest abschnittsweise in der elektrischen Leitung (60) angeordnet ist und als Betriebsparameter des elektrischen Leiters (126) eine Leitertemperatur (T) des elektrischen Leiters (126) misst,
- wobei der Temperatursensor (139) eine zur Leitertemperatur (T) korrelierende Temperaturinformation als Information über den Betriebsparameter des elektrischen Leiters (126) der Steuereinheit (70) bereitstellt.

4. Sicherungseinrichtung (15) nach einem der Ansprüche 1 bis 3,
- wobei in dem Datenspeicher (75) wenigstens ein drittes Leitertemperaturfenster (146) abgelegt ist,
- wobei das dritte Leitertemperaturfenster (146) oberhalb des zweiten Leitertemperaturfenster (145) liegt,
- wobei die Steuereinheit (70) ausgebildet ist, auf Grundlage der Information des Betriebsparameters, des vordefinierten Parameters und einer weiteren oberen Grenztemperatur (T_{OG3}) des dritten Leitertemperaturfensters (146) für den elektrischen Leiter (126) ein zweites Vorhersagezeitintervall (t_{V2}) zu ermitteln, in dem die Leitertemperatur (T) des elektrischen Leiters (126) die weitere obere Grenztemperatur (T_{OG3}) voraussichtlich erreicht,
- wobei die Steuereinheit (70) ausgebildet ist, eine zweite Zeitintervallinformation über das zweite Vorhersagezeitintervall (t_{V2}) an der Schnittstelle (70) bereitzustellen.

5. Sicherungseinrichtung (15) nach Anspruch 4,
- aufweisend eine Schalteinrichtung (91),
- wobei die Schalteinrichtung (91) mit dem elektrischen Leiter (126) elektrisch verbunden ist,
- wobei die Steuereinheit (70) mit der Schalteinrichtung (91) verbunden ist,
- wobei in einem ersten Schaltzustand die Schalteinrichtung (91) eine Übertragung elektrischer Energie über den elektrischen Leiter (126) erlaubt,
- wobei in einem zweiten Schaltzustand die Schalteinrichtung (91) die Übertragung elektrischer Energie über den elektrischen Leiter (126) unterbricht,
- wobei die Steuereinheit (70) ausgebildet ist, die ermittelte Leitertemperatur (T) mit der weiteren oberen Grenztemperatur (T_{GO3}) zu vergleichen,
- wobei bei Überschreiten der weiteren oberen Grenztemperatur (T_{OG3}) die Steuereinheit (70) die Schalteinrichtung (91) derart steuert, dass die Schalteinrichtung (91) von dem ersten Schaltzustand in den zweiten Schaltzustand wechselt.

6. Sicherungseinrichtung (15) nach einem der vorhergehenden Ansprüche,
- wobei die Ermittlungseinheit (55) eine Schalteinrichtung (91) aufweist,
- wobei die Schalteinrichtung (91) mit dem elektrischen Leiter (126) elektrisch verbunden ist,
- wobei die Steuereinheit (70) mit der Schalteinrichtung (91) verbunden ist,
- wobei in einem ersten Schaltzustand die Schalteinrichtung (91) eine Übertragung elektrischer Energie über den elektrischen Leiter (126) erlaubt,
- wobei in einem zweiten Schaltzustand die Schalteinrichtung (91) die Übertragung elektrischer Energie über den elektrischen Leiter (126) unterbricht, wobei die Schalteinrichtung (91) ausgebildet ist, als Betriebsparameter des elektrischen Leiters (126) einen über die Schalteinrichtung (91) übertragenen elektrischen Strom (I) zu ermitteln und der Steuereinheit (70) die Information über den übertragenen elektrischen Strom (I) des Betriebsparameters des elektrischen Leiters (26) bereitzustellen.

7. Sicherungseinrichtung (15) nach einem der vorhergehenden Ansprüche ,
- wobei die Steuereinheit (70) ausgebildet ist, die ermittelte aktuelle Leitertemperatur (T) mit einer unteren Grenztemperatur (T_{UG2}) des zweiten Leitertemperaturfensters (145) zu vergleichen,
- wobei die Steuereinheit (70) ausgebildet ist, bei Überschreiten der unteren Grenztemperatur (T_{UG2}) des zweiten Leitertemperaturfensters (145) an der Schnittstelle (65) ein weiteres Warnsignal mit einer weiteren Warnformation über das Überschreiten der unteren Grenztemperatur (T_{UG2}) des zweiten Leitertemperaturfensters (145) bereitzustellen.

8. Sicherungseinrichtung (15) nach Anspruch 7,
- wobei die Steuereinheit (70) ausgebildet ist, eine Nutzungsdauer der elektrischen Leitung (60) innerhalb des zweiten Leitertemperaturfensters (145) auf Grundlage der ermittelten aktuellen Leitertemperatur (T) zu ermitteln,
- wobei die Steuereinheit (70) ausgebildet ist, die ermittelte Nutzungsdauer mit einer im Datenspeicher (75) abgespeicherten Gesamtnutzungsdauer zu einer aktualisierten Gesamtnutzungsdauer zu summieren,
- wobei die Steuereinheit (70) ausgebildet ist, an der Schnittstelle (65) eine Information über die aktualisierte Gesamtnutzungsdauer bereitzustellen.

9. Sicherungseinrichtung (15) nach einem der Ansprüche 6 bis 8,
- wobei die Steuereinheit (70) ausgebildet ist, zeitlich nach Überschreiten der oberen Grenztemperatur (T_{OG3}) des dritten Leitertemperaturfensters (146) die ermittelte aktuelle Leitertemperatur (T) mit einer vordefinierten Erholungstemperatur (T_{E}) zu vergleichen,
- wobei die vordefinierte Erholungstemperatur (T_{E}) vorzugsweise geringer als die obere Grenztemperatur (T_{OG2}) des zweiten Leitertemperaturfensters (145) oder des ersten Leitertemperaturfensters (140) ist,
- wobei die Steuereinheit (70) ausgebildet ist, bei Unterschreiten der Erholungstemperatur (T_{E}) die Schalteinrichtung (91) derart zu steuern, dass die Schalteinrichtung (91) vom zweiten Schaltzustand in den ersten Schaltzustand wechselt.

10. Sicherungseinrichtung (15) nach Anspruch 9,
- wobei die Steuereinheit (70) ausgebildet ist, die ermittelte Gesamtnutzungsdauer mit einer maximalen Betriebsdauer (t_{B2}) der elektrischen Leitung (60) im zweiten Leitertemperaturfenster (145) zu vergleichen,
- wobei die Steuereinheit (70) ausgebildet ist, bei Überschreiten der maximalen Betriebsdauer (t_{B2}) durch die aktualisierte Gesamtnutzungsdauer nach Unterschreiten der Erholungstemperatur (T_{E}) die Schalteinrichtung (91) derart zu steuern, dass die Schalteinrichtung (91) im zweiten Schaltzustand verbleibt.

11. Autonomes oder teilautonomes Fahrzeug (10),
- aufweisend eine Sicherungseinrichtung (15), einen sicherheitskritischen Verbraucher (30), ein Fahrzeugsteuergerät (20) und eine Komponente (46, 47),
- wobei die Sicherungseinrichtung (15) nach einem der vorhergehenden Ansprüche ausgebildet ist,
- wobei der elektrische Leiter (126) mit dem sicherheitskritischen Verbraucher (30) elektrisch verbunden und ausgebildet ist, elektrische Energie für den sicherheitskritischen Verbraucher (30) zu übertragen,
- wobei das Fahrzeugsteuergerät (20) mit der Schnittstelle (65) und mit dem sicherheitskritischen Verbraucher (30) verbunden ist,
- wobei das Fahrzeugsteuergerät (20) ausgebildet ist, die Komponente (46, 47) auf Grundlage einer Information des sicherheitskritischen Verbrauchers (30) zu steuern,
- wobei das Fahrzeugsteuergerät (20) ausgebildet ist, das Warnsignal mit der Warninformation zu erfassen und die Warninformation bei der Steuerung der Komponente (46, 47) zu berücksichtigen.

12. Fahrzeug (10) nach Anspruch 11,
- aufweisend eine Ausgabeeinrichtung (40),
- wobei das Fahrzeugsteuergerät (20) mit der Ausgabeeinrichtung (40) verbunden ist,
- wobei das Fahrzeugsteuergerät (20) ausgebildet ist, auf Grundlage der Warninformation die Ausgabeeinrichtung (40) derart zu steuern, dass die Ausgabeeinrichtung (40) eine Warnmeldung für einen Fahrzeugführer (180) des Fahrzeugs (10) ausgibt
- und/oder
- wobei die Warninformation das Fahrzeugsteuergerät (20) bei einem Steuern des Fahrzeugs (10) berücksichtigt.

13. Fahrzeug (10) nach Anspruch 12,
- aufweisend eine Eingabeeinrichtung (45),
- wobei die Eingabeeinrichtung (45) mit dem Fahrzeugsteuergerät (20) verbunden ist,
- wobei das Fahrzeugsteuergerät (20) ausgebildet ist, auf Grundlage der Warninformation die Ausgabeeinrichtung (40) derart anzusteuern, dass die Ausgabeeinrichtung (40) eine Nutzerabfrage für den Fahrzeugführer (180) bereitstellt,
- wobei die Eingabeeinrichtung (45) ausgebildet ist, eine Eingabe durch den Fahrzeugführer (180) auf die Nutzerabfrage zu erfassen,
- wobei das Fahrzeugsteuergerät (20) ausgebildet ist, in Abhängigkeit der Eingabe die Schalteinrichtung (91) zu steuern.

14. Verfahren zum Betrieb einer Sicherungseinrichtung (15) nach einem der Ansprüche 1 bis 10 und/oder eines autonomen oder eines teilautonomen Fahrzeugs (10) nach einem der Ansprüche 11 bis 13,
- wobei über eine elektrische Leitung (60) eine elektrische Energie zu einem sicherheitskritischen Verbraucher (30) zur Energieversorgung des sicherheitskritischen Verbrauchers (30) übertragen wird,
- wobei bei Übertragung der elektrischen Energie sich die elektrische Leitung (60) zumindest abschnittsweise erwärmt,
- wobei eine ein Betriebsparameter eines elektrischen Leiters (126) der elektrischen Leitung (60) ermittelt wird,
- wobei auf Grundlage der Information des Betriebsparameters und eines vordefinierten Parametermodells eine Gleichgewichtstemperatur (T_{G}) des elektrischen Leiters (126) zu errechnen,
- wobei die Gleichgewichtstemperatur (T_{G}) einer Leitertemperatur (T) entspricht, auf die sich der elektrische Leiter (126) unter Beibehaltung der Umgebungsbedingungen des elektrischen Leiters (126) und eines über den elektrischen Leiter (126) übertragenen Stroms (I) erwärmt,
- wobei die ermittelte Gewichtstemperatur (T_{G}) mit einem vordefinierten Schwellenwert (S₁) verglichen wird,
- wobei bei Überschreiten des vordefinierten Schwellenwerts (S₁) durch die ermittelte Gleichgewichts-temperatur (T_{G}) ein Warnsignal mit einer Warninformation an der Schnittstelle (65) bereitgestellt wird.
**dadurch gekennzeichnet, dass**
- auf Grundlage der Information über den Betriebsparameter, eines vordefinierten Parameters und einer oberen Grenztemperatur (T_{OG2}) des zweiten Leitertemperaturfensters (145) für den elektrischen Leiter (126) ein erstes Vorhersagezeitintervall (t_{V1}) ermittelt wird, in dem eine Leitertemperatur (T) des elektrischen Leiters (126) die obere Grenztemperatur (T_{OG2}) des zweiten Leitertemperaturfensters (145) voraussichtlich erreicht,
wobei eine erste Zeitintervallinformation über das erste Vorhersagezeitintervall (t_{V1}) an der Schnittstelle (65) bereitgestellt wird.

## Claims

1. Safety device (15) for an autonomous or a semi-autonomous motor vehicle (10),
- having a control device (50), an ascertainment unit (55), and an electrical line (60) with an electrical conductor (126),
- wherein the control device (50) has a control unit (70) and an interface (65) connected to the control unit (70),
- wherein the electrical line (60) is designed to transmit an electrical energy to a safety-critical load (30),
- wherein the ascertainment unit (55) is connected to the control unit (70) and is designed to ascertain information about an operating parameter of the electrical conductor (126) and to supply the control unit (70) with the information,
- wherein the control unit (70) is designed to acquire the ascertained information,
- wherein the control unit (70) is designed to calculate an equilibrium temperature (T_{G}) of the electrical conductor (126) on the basis of the information of the operating parameter and a predefined parameter model,
- wherein the equilibrium temperature (T_{G}) corresponds to a conductor temperature (T) to which the electrical conductor (126) heats up while maintaining the ambient conditions of the electrical conductor (126) and a current (I) transmitted via the electrical conductor (126),
- wherein the control unit (70) is designed to compare the ascertained equilibrium temperature(T_{G}) with a predefined threshold value (S₁),
- wherein the control unit (70) is designed to supply a warning signal containing warning information at the interface (65) when the ascertained equilibrium temperature (T_{G}) exceeds the predefined threshold value (S₁),
**characterized in that**,
- the control device (50) has at least one data memory (75),
- wherein at least a first conductor temperature window (140) and a second conductor temperature window (145) are stored in the data memory (75),
- wherein the first conductor temperature window (140) correlates with continuous operation of the electrical line (60),
- wherein the second conductor temperature window (145) lies above the first conductor temperature window (140),
- wherein the control unit (70) is designed to ascertain a first forecast time interval (t_{V1}) for the electrical conductor (126) on the basis of the information about the operating parameter, a predefined parameter and an upper limit temperature (T_{OG2}) of the second conductor temperature window (145), in which first forecast time interval a conductor temperature (T) of the electrical conductor (126) is expected to reach the upper limit temperature (T_{OG2}) of the second conductor temperature window (145),
- wherein the control unit (70) is designed to supply the interface (65) with a first item of time interval information about the first forecast time interval (t_{V1}).

2. Safety device (15) according to Claim 1,
- wherein the interface (65) is designed to acquire an item of information about an ambient temperature of the vehicle (10),
- wherein the control unit (70) is designed to ascertain a conductor temperature (T) on the basis of the ascertained information, the ambient temperature and a further predefined parameter.

3. Safety device (15) according to Claim 1 or 2,
- wherein the ascertainment unit (55) comprises a temperature sensor (139),
- wherein the temperature sensor (139) is arranged on or at least in sections in the electrical line (60) and measures a conductor temperature (T) of the electrical conductor (126) as the operating parameter of the electrical conductor (126),
- wherein the temperature sensor (139) supplies the control unit (70) with an item of temperature information correlating to the conductor temperature (T) as the information about the operating parameter of the electrical conductor (126).

4. Safety device (15) according to one of Claims 1 to 3,
- wherein at least a third conductor temperature window (146) is stored in the data memory (75),
- wherein the third conductor temperature window (146) lies above the second conductor temperature window (145),
- wherein the control unit (70) is designed to ascertain a second forecast time interval (t_{V2}) for the electrical conductor (126) on the basis of the information of the operating parameter, the predefined parameter and a further upper limit temperature (T_{OG3}) of the third conductor temperature window (146), in which second forecast time interval the conductor temperature (T) of the electrical conductor (126) is expected to reach the further upper limit temperature (T_{OG3}),
- wherein the control unit (70) is designed to supply the interface (70) with a second item of time interval information about the second forecast time interval (t_{V2}).

5. Safety device (15) according to Claim 4,
- having a switching device (91),
- wherein the switching device (91) is electrically connected to the electrical conductor (126),
- wherein the control unit (70) is connected to the switching device (91),
- wherein, in a first switching state, the switching device (91) allows electrical energy to be transmitted via the electrical conductor (126),
- wherein, in a second switching state, the switching device (91) interrupts the transmission of electrical energy via the electrical conductor (126),
- wherein the control unit (70) is designed to compare the ascertained conductor temperature (T) with the further upper limit temperature (T_{GO3}),
- wherein, when the further upper limit temperature (T_{OG3}) is exceeded, the control unit (70) controls the switching device (91) in such a way that the switching device (91) changes from the first switching state to the second switching state.

6. Safety device (15) according to any one of the preceding claims,
- wherein the ascertainment unit (55) has a switching device (91),
- wherein the switching device (91) is electrically connected to the electrical conductor (126),
- wherein the control unit (70) is connected to the switching device (91),
- wherein, in a first switching state, the switching device (91) allows electrical energy to be transmitted via the electrical conductor (126),
- wherein, in a second switching state, the switching device (91) interrupts the transmission of electrical energy via the electrical conductor (126),
wherein the switching device (91) is designed to ascertain an electric current (I) transmitted via the switching device (91) as the operating parameter of the electrical conductor (126) and to supply the control unit (70) with the information about the transmitted electric current (I) of the operating parameter of the electrical conductor (26).

7. Safety device (15) according to any one of the preceding claims,
- wherein the control unit (70) is designed to compare the ascertained present conductor temperature (T) with a lower limit temperature (T_{UG2}) of the second conductor temperature window (145),
- wherein the control unit (70) is designed to, when the lower limit temperature (T_{UG2}) of the second conductor temperature window (145) is exceeded, supply the interface (65) with a further warning signal containing a further item of warning information about the lower limit temperature (T_{UG2}) of the second conductor temperature window (145) being exceeded.

8. Safety device (15) according to Claim 7,
- wherein the control unit (70) is designed to ascertain a useful life of the electrical line (60) within the second conductor temperature window (145) on the basis of the ascertained present conductor temperature (T),
- wherein the control unit (70) is designed to add the ascertained useful life to a total useful life stored in the data memory (75) to give an updated total useful life,
- wherein the control unit (70) is designed to supply the interface (65) with an item of information about the updated total useful life.

9. Safety device (15) according to any one of Claims 6 to 8,
- wherein the control unit (70) is designed to compare the ascertained present conductor temperature (T) with a predefined recovery temperature (T_{E}) temporally after the upper limit temperature (T_{OG3}) of the third conductor temperature window (146) has been exceeded,
- wherein the predefined recovery temperature (T_{E}) is preferably lower than the upper limit temperature (T_{OG2}) of the second conductor temperature window (145) or of the first conductor temperature window (140),
- wherein the control unit (70) is designed to, when the recovery temperature (T_{E}) is fallen below, control the switching device (91) in such a way that the switching device (91) changes from the second switching state to the first switching state.

10. Safety device (15) according to Claim 9,
- wherein the control unit (70) is designed to compare the ascertained total useful life with a maximum operating life (t_{B2}) of the electrical line (60) in the second conductor temperature window (145),
- wherein the control unit (70) is designed to, when the updated total useful life exceeds the maximum operating life (t_{B2}) after the recovery temperature (T_{E}) has been fallen below, control the switching device (91) in such a way that the switching device (91) remains in the second switching state.

11. Autonomous or semi-autonomous vehicle (10),
- having a safety device (15), a safety-critical load (30), a vehicle control device (20) and a component (46, 47),
- wherein the safety device (15) is designed according to any one of the preceding claims,
- wherein the electrical conductor (126) is electrically connected to the safety-critical load (30) and is designed to transmit electrical energy for the safety-critical load (30),
- wherein the vehicle control device (20) is connected to the interface (65) and to the safety-critical load (30),
- wherein the vehicle control device (20) is designed to control the component (46, 47) on the basis of an item of information of the safety-critical load (30),
- wherein the vehicle control device (20) is designed to acquire the warning signal containing the warning information and to take the warning information into account when controlling the component (46, 47).

12. Vehicle (10) according to Claim 11,
- having an output device (40),
- wherein the vehicle control device (20) is connected to the output device (40),
- wherein the vehicle control device (20) is designed to control the output device (40) on the basis of the warning information in such a way that the output device (40) outputs a warning message for a vehicle driver (180) of the vehicle (10)
- and/or
- wherein the vehicle control device (20) takes into account the warning information when controlling the vehicle (10).

13. Vehicle (10) according to Claim 12,
- having an input device (45),
- wherein the input device (45) is connected to the vehicle control device (20),
- wherein the vehicle control device (20) is designed to actuate the output device (40) on the basis of the warning information in such a way that the output device (40) supplies a user query for the vehicle driver (180),
- wherein the input device (45) is designed to acquire an input by the vehicle driver (180) in response to the user query,
- wherein the vehicle control device (20) is designed to control the switching device (91) in dependence on the input.

14. Method for operating a safety device (15) according to any one of Claims 1 to 10 and/or an autonomous or a semi-autonomous vehicle (10) according to any one of Claims 11 to 13,
- wherein an electrical energy is transmitted to a safety-critical load (30) via an electrical line (60), for the purpose of supplying energy to the safety-critical load (30),
- wherein the electrical line (60) heats up at least in sections when the electrical energy is transmitted,
- wherein an operating parameter of an electrical conductor (126) of the electrical line (60) is ascertained,
- wherein an equilibrium temperature (T_{G}) of the electrical conductor (126) is calculated on the basis of the information of the operating parameter and a predefined parameter model,
- wherein the equilibrium temperature (T_{G}) corresponds to a conductor temperature (T) to which the electrical conductor (126) heats up while maintaining the ambient conditions of the electrical conductor (126) and a current (I) transmitted via the electrical conductor (126),
- wherein the ascertained equilibrium temperature (T_{G}) is compared with a predefined threshold value (S₁),
- wherein, when the ascertained equilibrium temperature (T_{G}) exceeds the predefined threshold value (S₁), the interface (65) is supplied with a warning signal containing an item of warning information.
**characterized in that**,
- a first forecast time interval (t_{V1}) for the electrical conductor (126) is ascertained on the basis of the information about the operating parameter, a predefined parameter and an upper limit temperature (T_{OG2}) of the second conductor temperature window (145), in which first forecast time interval a conductor temperature (T) of the electrical conductor (126) is expected to reach the upper limit temperature (T_{OG2}) of the second conductor temperature window (145),
wherein the interface (65) is supplied with a first item of time interval information about the first forecast time interval (t_{V1}).

## Revendications

1. Dispositif coupe-circuit (15) pour un véhicule à moteur (10) autonome ou en partie autonome,
- comportant un appareil de commande (50), une unité de détermination (55) et un câble électrique (60) avec un conducteur électrique (126),
- l'appareil de commande (50) comportant une unité de commande (70) et une interface (65) raccordée à l'unité de commande (70),
- le câble électrique (60) étant réalisé pour transférer une énergie électrique à un consommateur (30) critique pour la sécurité,
- l'unité de détermination (55) étant raccordée à l'unité de commande (70) et étant réalisée pour déterminer une information sur un paramètre de fonctionnement du conducteur électrique (126) et pour fournir l'information à l'unité de commande (70),
- l'unité de commande (70) étant réalisée pour déterminer l'information déterminée,
- l'unité de commande (70) étant réalisée pour calculer sur la base de l'information du paramètre de fonctionnement et d'un modèle de paramètre prédéfini une température d'équilibre (T_{G}) du conducteur électrique (126),
- la température d'équilibre (T_{G}) correspondant à une température (T) de conducteur, à laquelle le conducteur électrique (126) est chauffé en conservant les conditions ambiantes du conducteur électrique (126) et d'un courant (I) transféré par le conducteur électrique (126),
- l'unité de commande (70) étant réalisée pour comparer la température d'équilibre (T_{G}) déterminée à une valeur de seuil (S₁) prédéfinie,
- l'unité de commande (70) étant réalisée pour fournir à l'interface (65) un signal d'avertissement avec une information d'avertissement en cas de dépassement de la valeur de seuil (S₁) prédéfinie par la température d'équilibre (T_{G}) déterminée,
**caractérisé en ce que**
- l'appareil de commande (50) comporte au moins une mémoire de données (75),
- au moins une première fenêtre de température de conducteur (140) et une deuxième fenêtre de température de conducteur (145) étant enregistrées dans la mémoire de données (75),
- la première fenêtre de température de conducteur (140) étant mise en corrélation avec un fonctionnement continu du câble électrique (60),
- la deuxième fenêtre de température de conducteur (145) étant supérieure à la première fenêtre de température de conducteur (140),
- l'unité de commande (70) étant réalisée pour déterminer, sur la base de l'information sur le paramètre de fonctionnement, d'un paramètre prédéfini et d'une température limite supérieure (T_{OG2}) de la deuxième fenêtre de température de conducteur (145) pour le conducteur électrique (126), un premier intervalle de temps de prédiction (t_{V1}) dans lequel une température (T) de conducteur du conducteur électrique (126) atteint probablement la température limite supérieure (T_{OG2}) de la deuxième fenêtre de température de conducteur (145),
- l'unité de commande (70) étant réalisée pour fournir à l'interface (65) une première information d'intervalle de temps sur le premier intervalle de temps de prédiction (t_{V1}) .

2. Dispositif coupe-circuit (15) selon la revendication 1,
- l'interface (65) étant réalisée pour détecter une information sur une température ambiante du véhicule (10),
- l'unité de commande (70) étant réalisée pour déterminer, sur la base de l'information déterminée, de la température ambiante et d'un autre paramètre prédéfini, une température (T) de conducteur.

3. Dispositif coupe-circuit (15) selon la revendication 1 ou la revendication 2,
- l'unité de détermination (55) comprenant un capteur de température (139),
- le capteur de température (139) étant disposé sur ou au moins par endroits dans le câble électrique (60) et mesurant une température (T) de conducteur du conducteur électrique (126) en tant que paramètre de fonctionnement du conducteur électrique (126),
- le capteur de température (139) fournissant à l'unité de commande (70) une information de température en corrélation avec la température (T) de conducteur en tant qu'information sur le paramètre de fonctionnement du conducteur électrique (126).

4. Dispositif coupe-circuit (15) selon l'une des revendications 1 à 3,
- au moins une troisième fenêtre de température de conducteur (146) étant enregistrée dans la mémoire de données (75),
- la troisième fenêtre de température de conducteur (146) étant supérieure à la deuxième fenêtre de température de conducteur (145),
- l'unité de commande (70) étant réalisée pour déterminer, sur la base de l'information du paramètre de fonctionnement, du paramètre prédéfini et d'une autre température limite supérieure (T_{OG3}) de la troisième fenêtre de température de conducteur (146) pour le conducteur électrique (126), un deuxième intervalle de temps de prédiction (t_{V2}) dans lequel la température (T) de conducteur du conducteur électrique (126) atteint probablement l'autre température limite supérieure (T_{OG3}),
- l'unité de commande (70) étant réalisée pour fournir à l'interface (70) une deuxième information d'intervalle de temps sur le deuxième intervalle de temps de prédiction (t_{V2}).

5. Dispositif coupe-circuit (15) selon la revendication 4,
- comportant un dispositif de commutation (91),
- le dispositif de commutation (91) étant raccordé électriquement au conducteur électrique (126),
- l'unité de commande (70) étant raccordée au dispositif de commutation (91),
- le dispositif de commutation (91) permettant un transfert d'énergie électrique par le conducteur électrique (126) dans un premier état de commutation,
- le dispositif de commutation (91) interrompant le transfert d'énergie électrique par le conducteur électrique (126) dans un deuxième état de commutation,
- l'unité de commande (70) étant réalisée pour comparer la température (T) de conducteur déterminée à l'autre température limite supérieure (T_{GO3}),
- l'unité de commande (70) commandant le dispositif de commutation (91) en cas de dépassement de l'autre température limite supérieure (T_{OG3}) de telle manière que le dispositif de commutation (91) passe du premier état de commutation dans le deuxième état de commutation.

6. Dispositif coupe-circuit (15) selon l'une des revendications précédentes,
- l'unité de détermination (55) comportant un dispositif de commutation (91),
- le dispositif de commutation (91) étant raccordé électriquement au conducteur électrique (126),
- l'unité de commande (70) étant raccordée au dispositif de commutation (91),
- le dispositif de commutation (91) permettant un transfert d'énergie électrique par le conducteur électrique (126) dans un premier état de commutation,
- le dispositif de commutation (91) interrompant le transfert d'énergie électrique par le conducteur électrique (126) dans un deuxième état de commutation, le dispositif de commutation (91) étant réalisé pour déterminer, en tant que paramètre de fonctionnement du conducteur (126) électrique, un courant (I) électrique transféré par le dispositif de commutation (91) et pour fournir à l'unité de commande (70) l'information sur le courant (I) électrique transféré du paramètre de fonctionnement du conducteur (26) électrique.

7. Dispositif coupe-circuit (15) selon l'une des revendications précédentes,
- l'unité de commande (70) étant réalisée pour comparer la température (T) de conducteur actuelle déterminée à une température limite inférieure (T_{UG2}) de la deuxième fenêtre de température de conducteur (145),
- l'unité de commande (70) étant réalisée pour fournir un autre signal d'avertissement avec une autre information d'avertissement sur le dépassement de la température limite inférieure (T_{UG2}) de la deuxième fenêtre de température de conducteur (145) à l'interface (65) en cas de dépassement de la température limite inférieure (T_{UG2}) de la deuxième fenêtre de température de conducteur (145).

8. Dispositif coupe-circuit (15) selon la revendication 7,
- l'unité de commande (70) étant réalisée pour déterminer une durée d'utilisation du câble électrique (60) à l'intérieur de la deuxième fenêtre de température de conducteur (145) sur la base de la température (T) de conducteur actuelle déterminée,
- l'unité de commande (70) étant réalisée pour cumuler la durée d'utilisation déterminée avec une durée d'utilisation totale sauvegardée dans la mémoire de données (75) en une durée d'utilisation totale mise à jour,
- l'unité de commande (70) étant réalisée pour fournir à l'interface (65) une information sur la durée d'utilisation totale mise à jour.

9. Dispositif coupe-circuit (15) selon l'une des revendications 6 à 8,
- l'unité de commande (70) étant réalisée pour comparer la température (T) de conducteur actuelle déterminée à une température de reprise (T_{E}) prédéfinie dans le temps après le dépassement de la température limite supérieure (T_{OG3}) de la troisième fenêtre de température de conducteur (146),
- la température de reprise (T_{E}) prédéfinie étant de préférence inférieure à la température limite supérieure (T_{OG2}) de la deuxième fenêtre de température de conducteur (145) ou de la première fenêtre de température de conducteur (140),
- l'unité de commande (70) étant réalisée pour commander le dispositif de commutation (91) en cas de non-dépassement de la température de reprise (T_{E}) de telle manière que le dispositif de commutation (91) passe du deuxième état de commutation au premier état de commutation.

10. Dispositif coupe-circuit (15) selon la revendication 9,
- l'unité de commande (70) étant réalisée pour comparer la durée d'utilisation totale déterminée à une durée de fonctionnement maximale (t_{B2}) du câble électrique (60) dans la deuxième fenêtre de température de conducteur (145),
- l'unité de commande (70) étant réalisée pour commander le dispositif de commutation (91) après le non-dépassement de la température de reprise (T_{E}) en cas de dépassement de la durée de fonctionnement maximale (t_{B2}) par la durée d'utilisation totale mise à jour de telle manière que le dispositif de commutation (91) reste dans le deuxième état de commutation.

11. Véhicule (10) autonome ou en partie autonome,
- comportant un dispositif coupe-circuit (15), un consommateur (30) critique pour la sécurité, un appareil de commande (20) de véhicule et un composant (46, 47),
- le dispositif coupe-circuit (15) étant réalisé selon l'une des revendications précédentes,
- le conducteur électrique (126) étant raccordé électriquement au consommateur (30) critique pour la sécurité et étant réalisé pour transférer de l'énergie électrique pour le consommateur (30) critique pour la sécurité,
- l'appareil de commande (20) de véhicule étant raccordé à l'interface (65) et au consommateur (30) critique pour la sécurité,
- l'appareil de commande (20) de véhicule étant réalisé pour commander le composant (46, 47) sur la base d'une information du consommateur (30) critique pour la sécurité,
- l'appareil de commande (20) de véhicule étant réalisé pour détecter le signal d'avertissement avec l'information d'avertissement et pour tenir compte de l'information d'avertissement lors de la commande du composant (46, 47).

12. Véhicule (10) selon la revendication 11,
- comportant un dispositif d'émission (40),
- l'appareil de commande (20) de véhicule étant raccordé au dispositif d'émission (40),
- l'appareil de commande (20) de véhicule étant réalisé pour commander le dispositif d'émission (40) sur la base de l'information d'avertissement de telle manière que le dispositif d'émission (40) émet un message d'avertissement pour un conducteur (180) du véhicule (10),
- et/ou
- l'appareil de commande (20) de véhicule tenant compte de l'information d'avertissement lors d'une commande du véhicule (10).

13. Véhicule (10) selon la revendication 12,
- comportant un dispositif d'entrée (45),
- le dispositif d'entrée (45) étant raccordé à l'appareil de commande (20) de véhicule,
- l'appareil de commande (20) de véhicule étant réalisé pour piloter le dispositif d'émission (40) sur la base de l'information d'avertissement de telle manière que le dispositif d'émission (40) fournit une requête d'utilisateur pour le conducteur (180) de véhicule,
- le dispositif d'entrée (45) étant réalisé pour détecter une entrée par le conducteur (180) de véhicule en réponse à la requête d'utilisateur,
- l'appareil de commande (20) de véhicule étant réalisé pour commander le dispositif de commutation (91) en fonction de l'entrée.

14. Procédé destiné à faire fonctionner un dispositif coupe-circuit (15) selon l'une des revendications 1 à 10 et/ou un véhicule (10) autonome ou en partie autonome selon l'une des revendications 11 à 13,
- une énergie électrique étant transférée à un consommateur (30) critique pour la sécurité pour l'alimentation en énergie du consommateur (30) critique pour la sécurité par un câble électrique (60),
- le câble électrique (60) chauffant au moins par endroits lors du transfert de l'énergie électrique,
- un paramètre de fonctionnement d'un conducteur électrique (126) du câble électrique (60) étant déterminé,
- une température d'équilibre (T_{G}) du conducteur électrique (126) étant calculée sur la base de l'information du paramètre de fonctionnement et d'un modèle de paramètre prédéfini,
- la température d'équilibre (T_{G}) correspondant à une température (T) de conducteur, à laquelle le conducteur électrique (126) est chauffé en conservant les conditions ambiantes du conducteur électrique (126) et d'un courant (I) transféré par le conducteur électrique (126),
- la température d'équilibre (T_{G}) déterminée étant comparée à une valeur de seuil (S₁) prédéfinie,
- un signal d'avertissement avec une information d'avertissement étant fourni à l'interface (65) en cas de dépassement de la valeur de seuil (S₁) prédéfinie par la température d'équilibre (T_{G}) déterminée,
**caractérisé en ce que**
- un premier intervalle de temps de prédiction (t_{V1}) est déterminé sur la base de l'information sur le paramètre de fonctionnement, d'un paramètre prédéfini et d'une température limite supérieure (T_{OG2}) de la deuxième fenêtre de température de conducteur (145) pour le conducteur électrique (126), dans lequel une température (T) de conducteur du conducteur électrique (126) atteint probablement la température limite supérieure (T_{OG2}) de la deuxième fenêtre de température de conducteur (145), une première information d'intervalle de temps sur le premier intervalle de temps de prédiction (t_{V1}) étant fournie à l'interface (65).
